(19) **Europäisches Patentamt European Patent Office Office européen des brevets**

(11) **EP 2 462 460 B1**

(12) **FASCICULE DE BREVET EUROPEEN**

(45) Date de publication et mention
de la délivrance du brevet:
**02.10.2013 Bulletin 2013/40**

(51) Int Cl.:
*G01S 3/74* (2006.01)   *H01Q 3/26* (2006.01)
*H01Q 21/06* (2006.01)

(21) Numéro de dépôt: **10740611.8**

(22) Date de dépôt: **02.08.2010**

(86) Numéro de dépôt international:
**PCT/EP2010/061231**

(87) Numéro de publication internationale:
**WO 2011/015561 (10.02.2011 Gazette 2011/06)**

(54) **PROCÉDÉ POUR OPTIMISER LA POSITION DE CAPTEURS IDENTIQUES DANS UN RÉSEAU DE COMMUNICATION**

**VERFAHREN ZUR OPTIMIERUNG DER POSITION VON IDENTISCHEN SENSOREN IN EINEM KOMMUNIKATIONSNETZ**

**METHOD FOR OPTIMIZING THE POSITION OF IDENTICAL SENSORS IN A COMMUNICATION NETWORK**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.08.2009 FR 0903835**

(43) Date de publication de la demande:
**13.06.2012 Bulletin 2012/24**

(73) Titulaire: **Thales
92200 Neuilly Sur Seine (FR)**

(72) Inventeurs:
  • **FERREOL, Anne
    F-92700 Colombes (FR)**
  • **CHEVALIER, Pascal
    F-92700 Colombes (FR)**

(74) Mandataire: **Dudouit, Isabelle et al
Marks & Clerk France
Conseils en Propriété Industrielle
Immeuble " Visium "
22, avenue Aristide Briand
94117 Arcueil Cedex (FR)**

(56) Documents cités:
  • **HOUCEM GAZZAH ET AL: "Optimum ambiguity-free isotropic antenna arrays" ACOUSTICS, SPEECH AND SIGNAL PROCESSING, 2009. ICASSP 2009. IEEE INTERNATIONAL CONFERENCE ON, IEEE, PISCATAWAY, NJ, USA, 19 avril 2009 (2009-04-19), pages 2157-2160, XP031459690 ISBN: 978-1-4244-2353-8**
  • **PETER J BEVELACQUA ET AL: "Optimizing Antenna Array Geometry for Interference Suppression" IEEE TRANSACTIONS ON ANTENNAS AND PROPAGATION, IEEE SERVICE CENTER, PISCATAWAY, NJ, US LNKD- DOI: 10.1109/TAP.2007.891509, vol. 55, no. 3, 1 mars 2007 (2007-03-01), pages 637-641, XP011172621 ISSN: 0018-926X**
  • **GAZZAH H ET AL: "Antenna arrays for enhanced estimation of azimuth and elevation" PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA; [IEEE INTERNATIONAL CONFERENCE ON ACOUSTICS, SPEECH, AND SIGNAL PROCESSING (ICASSP)], 2003 IEEE INTERNATIONAL CONFERENCE, vol. 5, 6 avril 2003 (2003-04-06), pages V_213-V_216, XP010639246 ISBN: 978-0-7803-7663-2**

**Description**

L'objet de la présente invention concerne notamment un procédé permettant de déterminer de manière optimale la position de capteurs dans un réseau comportant plusieurs capteurs utilisés pour effectuer de la goniométrie. Le procédé concerne les réseaux homogènes composés de capteurs identiques où la réponse du réseau à une direction $\Theta$ dépend uniquement du vecteur d'onde k($\Theta$) et des positions $p_n$ des capteurs.

L'invention trouve son application pour définir un système de goniométrie et un réseau de capteurs en particulier, à partir d'un cahier des charges de performances données, techniques, économiques. Elle concerne la définition de produits permettant de faire de la goniométrie dans les gammes Haute fréquence HF et très haute fréquence V/UHF ainsi que les produits IFF.

Elle trouve son utilisation dans des systèmes de goniométrie radio-cellulaire où les réseaux sont souvent des patchs de taille non négligeable que l'on souhaite installer sur une plaque de dimension finie.

De manière plus générale, le domaine concerné par la présente invention est celui du traitement d'antennes qui traite les signaux de plusieurs sources émettrices à partir des observations provenant de plusieurs capteurs.

Elle trouve aussi son application dans les procédés de localisation en imagerie médicale pour la localisation de tumeurs ou de foyers épileptiques, dans des applications de sondage pour la recherche pétrolière et minière dans le domaine de la sismique, dans la localisation de sources dans un contexte urbain ou sous-marin.

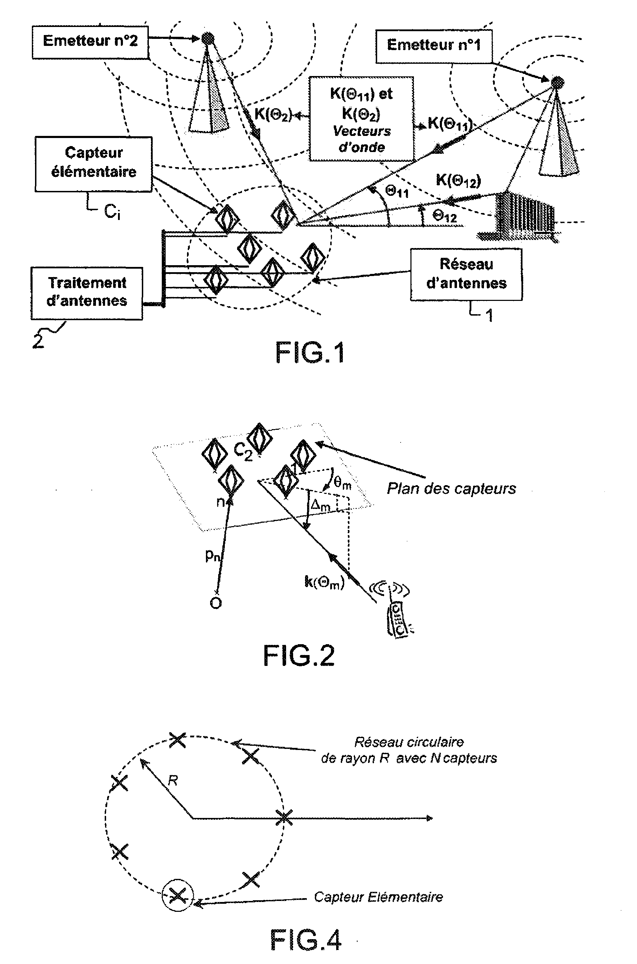

Un ensemble de capteurs est appelé réseau d'antennes 1 ou réseau de capteurs. Dans un contexte électromagnétique, les capteurs sont des antennes et les sources radioélectriques se propagent selon une polarisation. La figure 1 montre un exemple de système 2 de traitement d'antennes où un réseau de capteurs Ci reçoit les signaux de plusieurs sources d'incidences Ei sources d'incidence $\Theta_{mp}$. Un système de traitement d'antennes comprend notamment une unité de traitement comprenant un ou plusieurs processeurs, ce type de système étant connu de l'Homme du métier. Les techniques de traitement d'antennes exécuté par un processeur P ont pour objectif de séparer ou d'extraire des informations associées à chacune des sources en exploitant la diversité spatiale dépendante de la géométrie du réseau d'antennes et de l'incidence $\Theta_{mp}$ des sources. Le domaine est plus particulièrement celui de la goniométrie qui consiste à estimer les directions $\Theta_{mp}$ de chacune des sources.

Les capteurs élémentaires du réseau reçoivent les sources avec une phase et une amplitude dépendantes en particulier des incidences des trajets et de la position des capteurs.

D'après la figure 2, l'incidence d'un trajet est soit définie par des paramètres de direction $\Theta_m = \{\theta_m$ et/ou $\Delta_m\}$ soit par le vecteur d'onde $\mathbf{k}(\Theta_m) = [u_m\ v_m\ w_m]^T$ qui est de norme unité. Les angles $\theta_m$ et $\Delta_m$ sont respectivement l'azimut et l'élévation. Une technique de goniométrie a pour objectif d'estimer les composantes soit de $\Theta_m$, soit de k($\Theta_m$). Une goniométrie est dite q-D lorsque le nombre de paramètres à estimer vaut q. Les autres paramètres sont soit connus a priori soit indéterminés. D'après la figure 1, le vecteur $\mathbf{p_n} = [X_n\ y_n\ z_n]^T$ est le vecteur de position du n-ième capteur par rapport à un point d'origine **O**. Un réseau de N antennes est dit d-D, lorsque l'espace engendré par les vecteurs de position $\mathbf{p_n}$ ($1 \leq n \leq N$) est de dimension d. En conséquence un réseau linéaire est de dimension 1 (1-D) et un réseau plan de dimension 2 (2-D).

L'un des problèmes techniques à résoudre est celui de l'optimisation de la goniométrie d'un réseau d'antennes. Plus particulièrement, l'un des objectifs est de déterminer la position $p_n$ des N capteurs pour ($1 \leq n \leq N$) à partir de critères de performances contenus dans un cahier des charges tel que : la précision mono-source ou bi-sources, la résolution de deux sources, sous des contraintes telles que par exemple: un nombre N d'antennes donné, le caractère plus ou moins omnidirectionnel du réseau d'antennes dans une certaine zone de l'espace, un encombrement maximal donné, des positions admissibles et non admissibles d'implantation des capteurs, une distance minimale entre capteurs pour minimiser le couplage mutuel entre antennes, un niveau maximal d'ambiguïtés donné. La définition des positions optimales des capteurs dans un réseau donné permettra ainsi l'obtention d'un réseau optimisé en performances.

Notons qu'un réseau est dit omnidirectionnel lorsque les performances mono-source du réseau sont indépendantes de la direction d'arrivée.

La littérature concernant les calculs de performances théoriques est très abondante. Ces performances sont généralement des variances ou biais des paramètres à estimer tels que $\Theta_m$ ou k($\Theta_m$). Dans les articles de performances, à la connaissance du Demandeur, un seul ayant pour auteurs H. Gazzah et S. Marcos, intitulé « Cramer-Rao Bounds for Antenna Array Design » et publié au journal IEEE Trans. Signal Processing, 54 (1) : 336-345, Jan. 2006, établit un lien entre la borne stochastique et les positions $p_n$ des N capteurs en situation mono-source pour une goniométrie 2-D avec un réseau 2-D. Les auteurs de cet article utilisent ce lien pour établir un critère analytique de directivité dépendant de l'angle formé par les deux branches d'un réseau deux dimensions en V, le réseau est comprend N=2M+1 capteurs et il est composé de deux branches avec un réseau linéaire uniforme ayant le premier capteur en commun. L'article «Optimum Anbiguity-free Isotropic Antenna Arrays», H. Gozzah and K. Abed-Merain, ICASSP 2009, 19 Avril 2009, pp. 2157-2160 décrit la recherche systématique de position de sensure dans un réseau de geniométrie.

Malgré les avantages qu'elle apporte, la technique développée par l'art antérieur présente notamment les inconvénients suivants :

- d'avoir établi le lien analytique entre les performances et les positions des capteurs uniquement à partir de la borne stochastique en mono-source,
- de ne pas avoir établi de critère reliant la résolution de deux sources et la géométrie des capteurs,
- de traiter une seule famille de réseaux 2-D très particulière qui sont les réseaux en V composés de deux sous-réseaux linéaires uniformes respectant le critère de non-ambiguïté.

Dans la suite de la description, la notation $\Delta$ avec un seul indice comme $\Delta_m$, est utilisée pour désigner des angles, alors que la notation $\Delta$ avec deux indices comme $\Delta_{12}$ est relative à une distance dans l'espace du vecteur d'onde ou encore la norme de $\Delta k$ qui est la différence entre les vecteurs d'onde de deux sources.

L'objet de l'invention concerne un procédé pour déterminer la position optimale de capteurs identiques au sein d'un réseau ayant une dimension d-D ($1 \leq d \leq 3$) destiné à effectuer des mesures de goniométrie consistant à estimer les directions de sources au sein dudit réseau de communications, ledit réseau obtenu par le procédé minimisant les ambiguïtés, en tenant compte de paramètres d'un cahier des charges tels que l'ouverture physique $D_{ph}$ d'un réseau, caractérisé en ce qu'il comporte au moins les étapes suivantes :

a) - initialisation d'un ensemble $\Psi$ de réseaux et d'une valeur i correspondant à l'indice d'un réseau,
b)- sélectionner par un processus de tirage un réseau i- ième initial d- D ($\mathbf{p}_{d,n}$ini pour ($1 \leq n \leq N$) ) ledit réseau comprenant N capteurs de position $p_n$
c) - déterminer l'ouverture physique du réseau sélectionné en exécutant les étapes suivantes :

Etape n°1 (DPH)  : initialisation d'une valeur pour l'ouverture physique: $D_{ph}$ =0 pour tous les d- uplets $\mathbf{p}_{d,ni}$ où ($1 \leq i \leq d+1$) sachant que ($1 \leq n_i \leq N$)
Etape n°2 (DPH) : calcul de :

-   la distance $Di$ entre les deux capteurs lorsque $d$=1
-   du diamètre $Di$ du cercle passant par les trois capteurs lorsque $d$=2
-   du diamètre $Di$ de la sphère passant par les 4 capteurs lorsque $d$=3

Etape n°3 (DPH)  : calcul du centre $\overline{p}_0$ du cercle ou de la sphère lorsque d>1, pour d=1 calcul de la position moyenne des deux capteurs,
si $(\mathbf{p}_{d,n} - \mathbf{p}_0)^H (\mathbf{p}_{d,n} - \mathbf{p}_0) \leq D/2$ pour ($1 \leq n \leq N$) alors $D_{ph}$=D
Etape n°4 (DPH) : passage aux d-uplets suivants et retour à l'étape n°2 (DPH)

d)- transformation du réseau initial en un réseau d'ouverture physique $D_{ph}$ en effectuant : $\mathbf{p}_{d,n} = (\mathbf{D}_{ph} / \mathbf{D}_{ph}^0) (\mathbf{p}_{d,n}$ini$- \mathbf{p}_0)$ pour ($1 \leq n \leq N$)

e)- Calculer les valeurs de $D_i$ à partir de   $\mathbf{D}_{pp} = \sum_{i=1}^{d} (D_i)^2 \mathbf{h}_i \mathbf{h}_i^H$   , à partir des valeurs de $D_i$ déterminées, calculer

les paramètres $\sigma_{\theta min}$ et $\sigma_{\theta max}$ en utilisant $\sigma_{d,1} = \sigma_{\theta min} |\cos(\Delta_m)|$ et $\sigma_{d,d} = \sigma_{\theta,m} |\cos(\Delta_m)|$
où $\sigma_{\theta min}$ et $\sigma_{\theta max}$ sont les valeurs minimale et maximale de la précision en azimut à l'élévation $\Delta_m$ ainsi qu'une précision $\sigma_\Delta$ en $\Delta_m = 0.$,
f) - tester si la valeur du rapport $\sigma_{\theta min} / \sigma_{\theta max}$ vérifie les critères techniques donnés par le cahier des charges, si oui, valider la position des capteurs $\mathbf{p}_{d,n}$ et définir un réseau en tenant compte de la valeur desdites positions sinon, considérer un nouveau réseau faire varier l'indice i=i+1 et réitérer les étapes c) à e).

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1 représente un réseau de capteurs ainsi que les signaux émis par l'émetteur et se propageant vers un réseau de capteurs,
- La figure 2, la représentation d'une incidence d'une source,
- La figure 3, un exemple de schéma simplifié du fonctionnement du procédé selon l'invention,
- La figure 4, un réseau circulaire uniforme à deux dimensions,

- La figure 5, un exemple de réseau en cercles concentriques à deux dimensions
- La figure 6, un exemple de réseau en V avec 2 branches identiques de capteurs paramétrés par l'angle $\delta$ entre les 2 branches
- La figure 7, la représentation d'une ouverture physique d'un réseau à deux dimensions.

La description qui suit va être donnée dans le cadre de l'optimisation d'un réseau homogène composé de N capteurs identiques en présence de plusieurs sources.

### *Modélisation du signal et formulation du problème*

En présence de M sources, le signal en sortie du réseau de N capteurs s'écrit de la façon suivante :

$$\mathbf{x}(t) = \begin{bmatrix} x_1(t) \\ \vdots \\ x_N(t) \end{bmatrix} = \sum_{m=1}^{M} \tilde{\mathbf{a}}(\Theta_m)\, s_m(t) + \mathbf{n}(t) \qquad (1)\ .$$

Où $x_n(t)$ est le signal reçu sur le nième capteur, $s_m(t)$ est le signal de la m-ième source, $\mathbf{n}(t)$ est le bruit additif, $\Theta_m$ est la direction d'arrivée de la source définie (figure 1) et $\tilde{\mathbf{a}}(\Theta_m)$ est le vecteur directeur observé. En présence d'erreur de modèle le vecteur $\tilde{\mathbf{a}}(\Theta_m)$ s'écrit

$$\tilde{\mathbf{a}}(\Theta_m) = \mathbf{a}(\Theta_m) + \mathbf{e}_m \qquad (2)\ .$$

Où $\mathbf{a}(\Theta_m)$ est le vecteur directeur théorique tel que $\mathbf{a}(\Theta_m)^H \mathbf{a}(\Theta_m) = N$ et $\mathbf{e}_m$ est l'erreur de modèle. Selon la figure 1 et sachant que les capteurs sont identiques (ou homogènes), la nième composante de $\mathbf{a}(\Theta)$ s'écrit

$$a_n(\Theta) = \exp\left( j\frac{2\pi}{\lambda}\mathbf{k}(\Theta)^T \mathbf{p}_n \right) \qquad (3)\ .$$

Où $\mathbf{p}_n = [x_n\ y_n\ z_n]^T$ est le vecteur de position, $\lambda$ est la longueur d'onde et $k(\Theta)$ est le vecteur d'onde tel que

$$\mathbf{k}(\Theta) = \begin{bmatrix} u \\ v \\ w \end{bmatrix} \text{ avec } \begin{cases} u = \cos(\theta)\cos(\Delta) \\ v = \sin(\theta)\cos(\Delta) \\ w = \sin(\Delta) \end{cases} \qquad (4)\ .$$

Où $\Theta = \{\theta, \Delta\}$ dépend de l'azimut $\theta$ et de l'élévation $\Delta$. L'objectif de la goniométrie est d'estimer les paramètres $\Psi_m$ pouvant être égaux soit à la direction $\Theta_m$ soit au vecteur d'onde $\mathbf{k}(\Theta_m)$. Un algorithme de goniométrie donne les estimées $\hat{\Psi}_m$ des sources de direction $\Psi_m$ à partir d'un critère dépendant des paramètres $\Psi = \Theta$ ou $k(\Theta)$. Les performances peuvent être données en terme

- de précision avec

    - le biais $E[\hat{\Psi}_m] - \Psi_m$,
    - la variance ou EQM qui s'écrit
      $MS_{\Psi_m} = E[\Delta\Psi_m \Delta\Psi_m^T]$ avec $\Delta\Psi_m = \hat{\Psi}_m - \Psi_m$

- de résolution entre deux sources : présence de deux estimés $\hat{\Psi}_1$, et $\hat{\Psi}_2$, non associées à un lobe secondaire du critère de goniométrie. La résolution sera définie en fonction de la distance $\Delta_{12} = \|\mathbf{k}(\Theta_2) - \mathbf{k}(\Theta_1)\|$ entre 2 sources.
- d'ambiguïté d'ordre *M*: un réseau est ambiguë mathématiquement lorsqu'il existe au moins une incidence $\Psi^{ambig} \neq \Psi_m$ dont le vecteur directeur $\mathbf{a}(\Psi^{ambig})$ appartient à l'espace engendré par les vecteurs directeurs $\mathbf{a}(\Psi_m)$ pour $1 \leq m \leq M$.

Les conditions de directionalité et de précision du cahier des charges en mono-source donneront la forme de l'ellipse d'incertitude. Cette ellipse dépend des statistiques d'ordre 2 des vecteurs de position $\mathbf{p}_n$, ce qui permet alors de transformer un réseau initial suivant les statistiques du cahier des charges par un processus de blanchiment puis coloration.

La résolution de deux sources dépend des statistiques d'ordre 4 de la position des capteurs. De fait des réseaux ayant des performances identiques en mono-source peuvent avoir des performances différentes en résolution. En conséquence, parmi une famille de réseaux à performance identique en mono-source le procédé pourra classer les réseaux en fonction de leurs performances de résolution.

D'autre part, on sait que dans une famille de réseaux ayant des performances identiques en mono-source et bi-sources, tous les réseaux n'ont pas la même robustesse aux ambiguïtés. Il faudra alors classer les réseaux de cette famille suivant un critère d'ambiguïtés défini.

En pratique et au regard des objectifs de la goniométrie, le seul paramètre qui donne la direction d'une source n'est pas autre chose que le vecteur d'onde $\mathbf{k}(\Theta)$. Dans ces conditions le processus d'optimisation de réseaux sera basé sur les statistiques de bonne estimation de ce vecteur. Une hypothèse est de poser $\Psi=\mathbf{k}(\Theta)$. Dans le cas d'un réseau $d$-D on s'intéressera uniquement aux composantes du vecteur d'onde se projetant dans l'espace engendré par les positions des capteurs. En conséquence

- Pour un réseau plan 2-D: L'ellipse d'incertitude sera caractérisée par son grand axe, petit axe et son angle d'orientation.
- Pour un réseau linéaire 1-D: L'ellipse d'incertitude sera caractérisée uniquement par l'écart type et le biais de la précision d'estimation de la composante du vecteur d'onde se projetant sur la ligne.
- Pour un réseau linéaire 3-D : L'ellipse d'incertitude est dans le cas général un ellipsoïde qui contient 3 axes et deux angles. On peut aussi dans ce cas caractériser les performances pour les composantes du vecteur d'onde se projetant dans le plan le plus proche du réseau 3D. En effet comme le vecteur d'onde est normé la 3-ième composante se déduit des autres.

### *Outils de base permettant l'optimisation de réseau*

### Outils d'omni-directionalité et de précision déduites des performances mono-source

La matrice de corrélation de $\Delta\Psi_m = \hat{\Psi}_m - \Psi_m$ a l'expression suivante en mono-source

$$\mathrm{MS}_{\Psi_m} = \mathrm{E}\left[\Delta\Psi_m \Delta\Psi_m{}^T\right] = \alpha\mathbf{H}\left(\Psi_m\right)^{-1}$$

$$\mathbf{H}\left(\Psi_m\right) = 2\dot{\mathbf{A}}^H \Pi\left(\Psi_m\right)\dot{\mathbf{A}}$$

avec

$$\dot{\mathbf{A}} = \left[\frac{\delta\mathbf{a}\left(\Psi_m\right)}{\partial\Psi_m(1)} \quad \cdots \quad \frac{\delta\mathbf{a}\left(\Psi_m\right)}{\partial\Psi_m(d)}\right] \qquad (5)\ .$$

$$\Pi\left(\Psi_m\right) = \mathbf{I}_N - \frac{\mathbf{a}\left(\Psi_m\right)\mathbf{a}\left(\Psi_m\right)^H}{\mathbf{a}\left(\Psi_m\right)^H \mathbf{a}\left(\Psi_m\right)}$$

Sachant que $\Psi_m$ est un vecteur de dimension $d \times 1$. Les valeurs du coefficient $\alpha$ indiquées dans le tableau suivant dépendent du type de performances considérées.

Tableau 1 - Tableau des paramètres à associer aux critères de précision mono-source sachant $E[\mathbf{n}(t)\mathbf{n}(t)^H]=\sigma^2\mathbf{I}_N$

| Type de Performances | | Valeur du coefficient $\alpha$ |
|---|---|---|
| *Borne de Cramer* **RAO**<br><br>*A partir de* | *Cas Stochastique* | $\alpha = \dfrac{1 + \left(\dfrac{Nr_{ss}}{\sigma^2}\right)^{-1}}{K\left(\dfrac{r_{ss}}{\sigma^2}\right)}$ avec $r_{ss} = E\left[\left\|s_m\left(t_k\right)\right\|^2\right]$ |

(suite)

| Type de Performances | | Valeur du coefficient $\alpha$ |
|---|---|---|
| $\mathbf{x}(t_k)$ pour $1 \leq k \leq k$ | Cas déterministe | $\alpha = \dfrac{1}{K\left(\dfrac{\hat{r}_{ss}}{\sigma^2}\right)}$ avec $\hat{r}_{ss} = \dfrac{1}{K}\sum\limits_{k=1}^{K}\left|s_m\left(t_k\right)\right|^2$ |
| Performance de MUSIC | A temps d'intégration fini avec $\mathbf{x}(t_k)$ pour $1 \leq k \leq K$ | $\alpha = \dfrac{1}{K\left(\dfrac{r_{ss}}{\sigma^2}\right)}$ |
| | En présence d'erreur de modèle | $\alpha = \dfrac{E\left[\mathbf{e}_m{}^H \mathbf{e}_m\right]}{N}$ |

Généralement en présence d'un paramètre multi-dimensionnel $\Psi_m$, les performances sont données suivant un ellipsoïde d'incertitude qui dépend des éléments propres de la matrice $MS_{\Psi_m}$ ce qui revient à décomposer la variable $\Delta\Psi_m$ en $d$ variables indépendantes $\Delta\Psi_m{}^{(i)}$ telles que :

$$MS_{\Psi_m} = \sum_{i=I}^{d}\left(\sigma_{\Psi_m{}^{(i)}}\right)^2 \mathbf{h}_{\Psi_m{}^{(i)}}\mathbf{h}_{\Psi_m{}^{(i)}}{}^{H}$$

où

$$\Delta\Psi_m{}^{(i)} = \mathbf{h}_{\Psi_m{}^{(i)}}{}^{H}\Delta\Psi_m \quad \text{avec} \quad \left(\sigma_{\Psi_m{}^{(i)}}\right)^2 = E\left[\left(\Delta\Psi_m{}^{(i)}\right)^2\right]$$

(6) .

Où $(\sigma_{\Psi_m}{}^{(i)})^2$ et $\mathbf{h}_{\Psi_m}{}^{(i)}$ sont respectivement les valeurs propres et vecteurs propres de $MS_{\Psi_m}$. Lorsque $d=2$ on obtient une ellipse ayant pour grand axe $\sigma_{\Psi_m{}^{(i_{max})}} = \max\limits_{i}\left(\sigma_{\Psi_m{}^{(i)}}\right)$, pour petit axe $\sigma_{\Psi_m{}^{(i_{min})}} = \max\limits_{i}\left(\sigma_{\Psi_m{}^{(i)}}\right)$ et une orientation par rapport à la première composante de $\Delta\Psi_m$ valant $\varphi = angle$ $(\mathbf{h}_{\Psi_m}{}^{(i)}, [1\ 0]^{T})$ .

Dans la suite du paragraphe le lien entre la matrice $MS_{\Psi_m}$ (matrice dont les éléments propres déterminent l'ellipsoïde d'incertitude) et les positions $\mathbf{p}_n$ des capteurs est établi afin d'obtenir une relation avec les paramètres de l'ellipse. Le lien est établi dans un premier temps pour $\Psi_m = \mathbf{k}(\Theta_m)$. La matrice $\mathbf{H}\left(\mathbf{k}\left(\Theta_m\right)\right)$ s'écrit

$$\mathbf{H}\left(\mathbf{k}\left(\Theta_m\right)\right) = 2N\left(\frac{2\pi}{\lambda}\right)^2 \mathbf{D}_{pp}$$

$$\mathbf{D}_{pp} = \frac{1}{N}\sum_{n=1}^{N}\left(\mathbf{p}_n - \overline{\mathbf{p}}\right)\left(\mathbf{p}_n - \overline{\mathbf{p}}\right)^T \quad \text{avec} \quad \overline{\mathbf{p}} = \frac{1}{N}\sum_{n=1}^{N}\mathbf{p}_n$$

(7) .

Cette dernière expression montre que la matrice $MS_{\mathbf{k}(\Theta_m)}$ est indépendante de la valeur du vecteur d'onde $\mathbf{k}(\Theta_m)$ en dépendant des statistiques d'ordre deux ($\mathbf{D}_{pp}$) des positions $\mathbf{p}_n$ des capteurs. Un réseau est $d$-D lorsque le rang de la matrice $\mathbf{D}_{pp}$ vaut $d$. Sans rien changer à la généralité du problème, un réseau est dit une dimension ou 1-D lorsque $y_n=z_n=0$ et deux dimensions ou 2-D lorsque $z_n=0$. Pour un réseau $d$-D, on ne s'intéressera qu'à la version projetée $\mathbf{k}_d(\Theta_m)$ du vecteur d'onde $\mathbf{k}(\Theta_m)$ sur l'espace engendré par les positions des capteurs. Dans le tableau suivant, on résume quelques exemples pour les expressions des vecteurs d'onde $\mathbf{k}_d(\Theta_m)$ et des positions des capteurs $\mathbf{p}_n$

**Tableau 2 - Valeur de $k_d(\Theta_m)$ et $p_n$ pour $1 \le d \le 3$**

| Dimension du réseau | $k_d(\Theta)$ | $p_n$ | $p_{d,n}$ |
|---|---|---|---|
| **1-D ou linéaire** | $k_1(\Theta) = u$<br><br>avec $u = \cos(\theta)\cos(\Delta)$ | $p_n = \begin{bmatrix} x_n \\ 0 \\ 0 \end{bmatrix}$ | $p_{1,n} = x_n$ |
| **2-D ou plan** | $k_2(\Theta) = \begin{bmatrix} u \\ v \end{bmatrix}$<br><br>avec $v = \sin(\theta)\cos(\Delta)$ | $p_n = \begin{bmatrix} x_n \\ y_n \\ 0 \end{bmatrix}$ | $p_{2,n} = \begin{bmatrix} x_n \\ y_n \end{bmatrix}$ |
| **3-D** | $k_3(\Theta) = k(\Theta) = \begin{bmatrix} u \\ v \\ w \end{bmatrix}$<br><br>avec $w = \sin(\Delta)$ | $p_n = \begin{bmatrix} x_n \\ y_n \\ z_n \end{bmatrix}$ | $p_{3,n} = p_n$ |

Suivant le Tableau 2, l'expression du vecteur directeur devient

$$a_n(\Theta) = \exp\left( j\frac{2\pi}{\lambda} k_d(\Theta)^T p_{d,n} \right) \qquad (8) \ .$$

Les matrices de corrélation des $p_{d,n}$ et $p_n$ sont notées de la même manière, en conséquence

$$H\left(k_d(\Theta_m)\right) = 2N\left(\frac{2\pi}{\lambda}\right)^2 D_{pp}$$

avec $\qquad\qquad\qquad\qquad\qquad\qquad\qquad\qquad\qquad\qquad\qquad\qquad (9) \ .$

$$D_{pp} = \frac{1}{N}\sum_{n=1}^{N}\left(p_{d,n} - \bar{p}\right)\left(p_{d,n} - \bar{p}\right)^T \text{ avec } \bar{p} = \frac{1}{N}\sum_{n=1}^{N}p_{d,n}$$

la matrice de corrélation de l'expression (5) devient donc :

$$MS_{k_d(\Theta_m)} = \frac{\alpha}{2N}\left(\frac{2\pi}{\lambda}\right)^{-2}\left(D_{pp}\right)^{-1} \qquad (10)$$

La décomposition en éléments propres de $MS_{k_d(\Theta_m)}$ dépend directement des éléments propres $((D_i)^2$ et $h_i)$ de $D_{pp}$. Plus précisément on obtient

$$MS_{k_d(\Theta_m)} = \sum_{i=1}^{d}\left(\sigma_{d,i}\right)^2 h_i h_i^H \text{ avec } \sigma_{d,i} = \frac{\sqrt{\alpha}}{\sqrt{8N}\pi\left(\dfrac{D_i}{\lambda}\right)} \qquad (11)$$

Sachant que la décomposition en éléments propres de $D_{pp}$ est la suivante

$$\mathbf{D}_{pp} = \sum_{i=1}^{d} \left( D_i \right)^2 \mathbf{h}_i \mathbf{h}_i^{H} \qquad (12)$$

où $(D_i)^2$ et $\mathbf{h}_i$ sont respectivement les valeurs propres et les vecteurs propres de $\mathbf{D}_{pp}$. L'objectif est de calculer les valeurs de $\sigma_{d,i}$ et les $\mathbf{h}_i$ qui définissent les axes des ellipses d'incertitude à partir des performances techniques données dans le cahier des charges. La description qui suit établit le lien entre $\sigma_{d,i}$ et les $\mathbf{h}_i$ et les performances du cahier des charges.

On dira que l'on est en présence d'un réseau omni-directionnel lorsque

$$D_1 = \cdots = D_d = D_0 \text{ et donc que } \mathbf{D}_{pp} = \left( D_0 \right)^2 \mathbf{I}_d \qquad (13)$$

Dans l'équation (13) la notion d'omnidirectionnalité est définie à partir des deux critères suivants sur la précision d'estimation du vecteur d'onde

- les composantes de l'erreur d'estimation du vecteur d'onde sont indépendantes.
- les composantes de l'erreur d'estimation du vecteur d'onde ont la même variance.

Il est possible de montrer que ce critère d'omni-directionnalité est équivalent à dire que la moyenne statistique de l'angle formé entre les vecteurs $\mathbf{k}_d (\Theta)$ et $\mathbf{k}=_d (\Theta)$ est indépendante du vecteur d'onde $\mathbf{k}_d (\Theta)$. Plus précisément en notant $\mathbf{k} = \mathbf{k}_d (\Theta)$ et $\hat{\mathbf{k}} = \hat{\mathbf{k}}_d(\Theta)$, le critère $C(\mathbf{k})$ suivant

$$C\left( \mathbf{k} \right) = E\left[ d\left( \mathbf{k}, \hat{\mathbf{k}} \right) \right] \text{ avec}$$

$$d\left( \mathbf{k}, \hat{\mathbf{k}} \right) = 1 - \frac{\left| \mathbf{k}^H \hat{\mathbf{k}} \right|^2}{\left( \mathbf{k}^H \mathbf{k} \right)\left( \hat{\mathbf{k}}^H \hat{\mathbf{k}} \right)} \qquad (14)$$

est indépendant de $\mathbf{k} = \mathbf{k}_d (\Theta)$. Cela est équivalent à dire que les valeurs propres de $MS_{kd(\Theta m)}$ sont identiques et donc que $D_1 = ... = D_d$. Dans la suite du développement les éléments propres de $MS_{kd(\Theta m)}$ permettent de définir entièrement les ellipses (ou ellipsoïdes) d'incertitudes qui définissent entièrement la directionalité d'un réseau de capteurs.

Sachant que pour un réseau omnidirectionnel :

- UCA (Uniform Circular Array) de diamètre $D_{ph}$ où $d=2$ que $D_0 = D_{ph} / \sqrt{8}$

- USA (Uniform Spherical Array) de diamètre $D_{ph}$ où $d=3$ que $D_0 = D_{ph} / \sqrt{16}$ On en déduit que l'ouverture équivalente du réseau de dimension d, $D_{d,e}$ où l'indice e est équivalent à UCA (ou USA), est l'ouverture physique $D_{ph}$ du réseau $d$-D uniforme omni-directionnel équivalent. En conséquence

$$D_{d,e} = 2^{(d+1)/2} D_0 = 2^{(d+1)/2} \sqrt{\frac{trace(\mathbf{D}_{pp})}{d}} \text{ avec } \mathbf{D}_{pp}{}^{omni} = \frac{\left( D_{d,e} \right)^2}{2^{d+1}} \mathbf{I}_d \qquad (15)$$

Lorsqu'un réseau est omni-directionnel cela veut dire que chacune des composantes du vecteur d'onde a la même variance d'estimation et que les estimés des différentes composantes sont indépendantes. En conséquence les performances d'un réseau omni-directionnel vérifient

$$\mathrm{MS}_{\mathbf{k}_d(\Theta_m)} = \left(\sigma_d\right)^2 \mathbf{I}_d \quad \text{où } \sigma_d = \frac{\sqrt{\alpha}}{\sqrt{2^{(2-d)}} N \pi \left(\dfrac{D_{d,e}}{\lambda}\right)} \tag{16}$$

Cette dernière expression montre que l'erreur quadratique moyen ou EQM $\sigma_d$ de chacune des composantes du vecteur d'onde est inversement proportionnel à l'ouverture équivalente $D_{d,e}$ du réseau. En conséquence, pour transformer un réseau de capteurs de dimension $d$-D ayant chacun une position $\mathbf{p}_{d,n}$ avec une matrice de corrélation $\mathbf{D}_{pp}$ en un réseau de capteurs de position $\mathbf{p}_{d,n}{}^{omni}$ omnidirectionnel ayant une ouverture équivalente $D_{d,e}$ fixant la précision, il suffit d'effectuer la transformation matricielle suivante

$$\mathbf{p}_{d,n}{}^{omni} = \left(\mathbf{D}_{pp}{}^{omni}\right)^{1/2} \mathbf{D}_{pp}{}^{-1/2} \mathbf{p}_{d,n} = \frac{D_{d,e}}{2^{(d+1)/2}} \mathbf{D}_{pp}{}^{-1/2} \left(\mathbf{p}_{d,n} - \overline{\mathbf{p}}\right) \tag{17}$$

Toutefois suivant les requêtes du cahier des charges il n'est pas forcément souhaitable de concevoir des réseaux omni- directionnels. Ainsi il est possible d'optimiser un réseau ayant une directivité plus ou moins importante dans une  direction $\Theta_m$. Le cahier des charges peut donner, par exemple, un écart type minimal et maximal de l'azimut pour une source dont l'élévation d'arrivée vaut $\Delta_m$. Pour cela il est nécessaire de revenir à la notion d'ellipse d'incertitude dans l'espace des angles d'arrivées $\Theta_m$ qui dépend des éléments propres de la matrice $\mathbf{MS}_{\Theta_m}$. L'objectif est alors de calculer la matrice $\mathbf{D}_{pp}$ qui permet d'obtenir la matrice de performances $\mathbf{MS}_{\Theta_m}$ dans l'espace des angles d'arrivées. Sachant que les équations (10) (11) ont établi le lien entre les éléments propres de $D_{pp}$ et ceux de la matrice $MS_{kd(\Theta m)}$ définissant l'ellipse d'incertitude dans l'espace du vecteur d'onde, il suffit d'établir la relation entre les élements propres de $MS_{kd(\Theta m)}$ et $\mathbf{MS}_{\Theta m}$ pour obtenir le lien entre $\mathbf{MS}_{\Theta m}$ et $\mathbf{D}_{pp}$. Plus particulièrement le procédé définira des paramètres de directivité qui conditionneront les éléments propres des matrices $\mathbf{MS}_{kd(\Theta m)} = \alpha \mathbf{H}\,(\mathbf{k}_d\,(\Theta_m)\,)^{-1}$ et $\mathbf{MS}_{\Theta m} = \alpha \mathbf{H}\,(\Theta_m)^{-1}$. La matrice $\mathbf{H}\,(\Theta_m)$ s'écrit de la manière suivante en fonction de la matrice $\mathbf{H}\,(\mathbf{k}_d\,(\Theta_m)\,)$ qui est de rang plein

$$\mathbf{H}\left(\Theta_m\right) = \mathbf{J}_d\left(\Theta_m\right)^H \mathbf{H}\left(\mathbf{k}_d\left(\Theta_m\right)\right) \mathbf{J}_d\left(\Theta_m\right) \tag{18}$$

Où $\mathbf{J}_d\,(\Theta_m)$ est le Jacobien. Afin que la matrice $\mathbf{H}(\Theta_m)$ soit de rang plein, le nombre de paramètres angulaire de $\Theta_m$ doit être inférieur ou égal à $d$, en conséquence

- Cas des réseaux 3-D ($d$=3): $\Theta_m = \{\theta_m, \Delta_m\}$
- Cas des réseaux 2-D ($d$=2): $\Theta_m = \{\theta_m, \Delta_m\}$
- Cas des réseaux 1-D ($d$=1): $\Theta_m = \Theta_{m|\Delta_0} = \{\theta_m\}$ sachant que $\Delta_m = \Delta_0$
- Cas des réseaux 1-D ($d$=1): $\Theta_m = \Theta_{m|\theta_0} = \{\Delta_m\}$ sachant que $\theta_m = \theta_0$

Le cas d=1 est en réalité un cas dégénéré. Dans le tableau suivant, on résume les valeurs possibles du Jacobien en fonction de la dimension d du réseau

**Tableau 3 - Valeur du Jacobien en fonction de la dimension du réseau**

| Dimension du réseau | | $\mathbf{J}_d(\Theta_m) = \mathbf{K}_d(\Theta_m)\Lambda_d$ |
|---|---|---|
| **1-D ou linéaire** | $\Theta_{m|\Delta_0} = \{\theta_m\}$ | $\mathbf{K}_1 = 1$<br>$\Lambda_1 = \cos(\Delta_0)\sin(\theta_m)$ |
| | $\Theta_{m|\theta_0} = \{\Delta_m\}$ | $\mathbf{K}_1 = 1$<br>$\Lambda_1 = \sin(\Delta_m)\cos(\theta_0)$ |
| **2-D ou plan** | | $\mathbf{K}_2\left(\Theta_m\right) = \left[\,\mathbf{k}_2\left(\theta_m + \dfrac{\pi}{2}, 0\right) \quad \mathbf{k}_2\left(\theta_m, 0\right)\,\right]$<br><br>$\Lambda_2\left(\Theta_m\right) = \begin{bmatrix} \cos\left(\Delta_m\right) & 0 \\ 0 & \sin\left(\Delta_m\right) \end{bmatrix}$ |

(suite)

| Dimension du réseau | $\mathbf{J}_d(\Theta_m)=\mathbf{K}_d(\Theta_m)\Lambda_d$ |
|---|---|
| 3-D | $$\mathbf{K}_3\left(\Theta_m\right)=\left[\mathbf{k}\left(\theta_m+\frac{\pi}{2},0\right)\quad\mathbf{k}\left(\theta_m,\Delta_m+\frac{\pi}{2}\right)\right]$$ $$\Lambda_3=\begin{bmatrix}\cos\left(\Delta_m\right) & 0 \\ 0 & 1\end{bmatrix}$$ |

La matrice $\mathbf{MS}_{\Theta m}$ peut alors s'écrire

$$\mathrm{MS}_{\Theta_m}=\left(\sum_{i=1}^{d}\left(\sigma_{d,i}\right)^{-2}\mathbf{h}_i\left(\Theta_m\right)\mathbf{h}_i\left(\Theta_m\right)^H\right)^{-1}\text{ avec }\begin{cases}\mathbf{h}_i\left(\Theta_m\right)=\Lambda_d{}^H\mathbf{K}_d\left(\Theta_m\right)^H\mathbf{h}_i \\ \sigma_{d,i}=\dfrac{\sqrt{\alpha}}{\sqrt{8N}\pi\left(\dfrac{D_i}{\lambda}\right)}\end{cases}\qquad(19)$$

Dans le cas omni-directionnel où $\sigma_{d,i}=\sigma_d$ pour $1\le i\le d$ (voir (16)), l'expression (19) ci-dessus devient :

$$\mathrm{MS}_{\Theta_m}=\left(\sigma_d\right)^2\Lambda_d{}^{-2}\text{ avec }\sigma_d=\frac{\sqrt{\alpha}}{\sqrt{2^{(2-d)}N}\pi\left(\dfrac{D_{d,e}}{\lambda}\right)}\qquad(20)$$

car les matrices $\mathbf{K}_d$, $(\Theta_m)$ sont unitaires. Sachant que les matrices $\Lambda_d$ sont diagonales, les estimations des azimuts et des élévations sont indépendantes (ou découplées) pour des réseaux omni-directionnels lorsque $d>1$. Dans ces conditions, les axes de l'ellipse d'incertitude dans l'espace des angles d'azimuth $\theta_m$ et d'élévation $\Delta_m$, $\Theta_m=\{\theta_m,\Delta_m\}$ sont

définis par les écarts types $\sigma_\theta=\sqrt{E\left[\left(\theta_m-\hat{\theta}_m\right)^2\right]}$ et $\sigma_\Delta=\sqrt{E\left[\left(\Delta_m-\hat{\Delta}_m\right)^2\right]}$ respectivement des azimuts et des élévations. Le tableau suivant résume les différentes valeurs possibles de $\sigma_\theta$ et $\sigma_\Delta$ pour un réseau omni-directionnel en fonction de la dimension du réseau

**Tableau 4 - Précision en azimut et élévation d'un réseau omni-directionnel**

| Dimension du réseau | | $\sigma_\theta$ | $\sigma_\Delta$ |
|---|---|---|---|
| 1-D ou linéaire | $\Theta_{m\|\Delta_0}=\{\theta_m\}$ | $\sigma_\theta=\dfrac{\sigma_1}{\left\|\cos\left(\Delta_0\right)\sin\left(\theta_m\right)\right\|}$ | Pas défini |
| | $\Theta_{m\|\theta_0}=\{\Delta_m\}$ | Pas défini | $\sigma_\Delta=\dfrac{\sigma_1}{\left\|\sin\left(\Delta_m\right)\cos\left(\theta_0\right)\right\|}$ |
| 2-D ou plan | | $\sigma_\theta=\dfrac{\sigma_2}{\left\|\cos\left(\Delta_m\right)\right\|}$ | $\sigma_\Delta=\dfrac{\sigma_2}{\left\|\sin\left(\Delta_m\right)\right\|}$ |
| 3-D | | $\sigma_\theta=\dfrac{\sigma_3}{\left\|\cos\left(\Delta_m\right)\right\|}$ | $\sigma_\Delta=\sigma_3$ |

Dans le cas où les réseaux sont non omnidirectionnels, la directionalité sera définie à partir des incidences $\Theta_m$ où l'estimation de l'azimut et de l'élévation sont découplées. Ce découplage est vérifié lorsque

$$\mathbf{K}_d\left(\Theta_m\right)^H \mathbf{h}_i = \mathbf{e}_\theta = \begin{bmatrix} 1 \\ 0 \end{bmatrix} \text{ ou } \mathbf{e}_\Delta = \begin{bmatrix} 0 \\ 1 \end{bmatrix} \text{ pour } 1 \le i \le d \qquad (21)$$

Lorsque la condition de l'équation (21) est obtenue, alors

$$\mathrm{MS}_{\Theta_m} = \left( \sum_{i=1}^d \left(\sigma_{d,i}\right)^{-2} \mathbf{h}_i\left(\Theta_m\right)\mathbf{h}_i\left(\Theta_m\right)^H \right)^{-1} \text{ avec } \begin{cases} \mathbf{h}_i\left(\Theta_m\right) = \Lambda_d^{\,H} \mathbf{K}_d\left(\Theta_m\right)^H \mathbf{h}_i \\ \sigma_{d,i} = \dfrac{\sqrt{\alpha}}{\sqrt{8N}\pi\left(\dfrac{D_i}{\lambda}\right)} \end{cases} \qquad (22)$$

<u>**Dans le cas du réseau 2- D**</u>, la condition de l'équation (21) est vérifiée lorsque $\mathbf{h}_i$ est orthogonal à $\mathbf{k}_2\left(\theta_m + \dfrac{\pi}{2}, 0\right)$ ou $\mathbf{k}_2\,(\theta_m, 0)$. En posant $\mathbf{h}_1 = \mathbf{k}_2\left(\theta_m + \dfrac{\pi}{2}, 0\right)$ et $\mathbf{h}_1 = \mathbf{k}_2\,(\theta_m, 0)$, pour $\Theta_m = \{\theta_m, \Delta_m\}$

$$\mathrm{MS}_{\Theta_m = \{\theta_m, \Delta_m\}} = \left(\sigma_\theta\right)^2 \mathbf{e}_\theta \mathbf{e}_\theta^{\,H} + \left(\sigma_\Delta\right)^2 \mathbf{e}_\Delta \mathbf{e}_\Delta^{\,H} \text{ avec } \begin{cases} \sigma_\theta = \dfrac{\sigma_{d,1}}{\left|\cos\left(\Delta_m\right)\right|} \\ \sigma_\Delta = \dfrac{\sigma_{d,2}}{\left|\sin\left(\Delta_m\right)\right|} \end{cases} \qquad (23)$$

et pour $\Theta_m = \{\theta_m + \pi/2, \Delta_m\}$

$$\mathrm{MS}_{\Theta_m = \{\theta_m + \frac{\pi}{2}, \Delta_m\}} = \left(\sigma_\theta\right)^2 \mathbf{e}_\theta \mathbf{e}_\theta^{\,H} + \left(\sigma_\Delta\right)^2 \mathbf{e}_\Delta \mathbf{e}_\Delta^{\,H} \text{ avec } \begin{cases} \sigma_\theta = \dfrac{\sigma_{d,2}}{\left|\cos\left(\Delta_m\right)\right|} \\ \sigma_\Delta = \dfrac{\sigma_{d,1}}{\left|\sin\left(\Delta_m\right)\right|} \end{cases} \qquad (24)$$

D'après (23)(24) en fixant l'élévation à $\Delta_m$, on montre que l'écart type en azimut $\sigma_\theta$ est bornée de la manière suivante

$$\sigma_{\theta_{\min}} \le \sigma_\theta \le \sigma_{\theta_{\max}} \text{ avec } \begin{cases} \sigma_{\theta_{\min}} = \dfrac{\sigma_{d,1}}{\left|\cos\left(\Delta_m\right)\right|} \\ \sigma_{\theta_{\max}} = \dfrac{\sigma_{d,2}}{\left|\cos\left(\Delta_m\right)\right|} \end{cases} \qquad (25)$$

Lorsque $\sigma_{d,1} \le \sigma_{d,2}$. On peut alors envisager un processus de transformation d'un réseau quelconque en un réseau directif. Le cahier des charges peut donner les valeurs minimale et maximale $\sigma_{\theta_{\min}}$ et $\sigma_{\theta_{\max}}$ de la précision en azimut à l'élévation $\Delta_m$. Il est à noter que le rapport $\sigma_{\theta_{\max}} / \sigma_{\theta_{\min}}$ est un facteur de directivité car lorsque $\sigma_{\theta_{\max}} = \sigma_{\theta_{\min}}$ le réseau est omni-directionnel. En conséquence, les étapes de transformation d'un réseau initial de dimension 2-D composé de $N$ capteurs de position $\mathbf{p}_{2,n}$ en un réseau de directivité choisie sont alors les suivantes. Les deux paramètres du cahier des charges du processus détaillé ci-dessous sont les valeurs minimale et maximale $\sigma_{\theta\min}$ *et* $\sigma_{\theta\max}$ de la précision en azimut à l'élévation $\Delta_m$. Le cahier des charges donne l'azimut $\theta_{directif} = \theta_m + \dfrac{\pi}{2}$ pour lequel la précision en azimut $\sigma_{\theta\min}$ est minimal. Il est à noter que le processus décrit ci-dessous comprend le cas des réseaux omni-directionnels avec $\sigma_{\theta\min} = \sigma_{\theta\max}$.

**Etape (T-2D) n° 1** : Calcul de la matrice de corrélation $D_{pp}^{init}$ des $\mathbf{p}_{2,n}$ selon l'équation (9).

**Etape (T-2D) n°2** : Calcul de $\sigma_{d,1} = \sigma_{\theta\min} |\cos (\Delta_m)|$ et $\sigma_{d,2} = \sigma_{\theta\max} |\cos (\Delta_m)|$ en utilisant (25).

**Etape (T-2D) n°3** : Calcul des tailles de réseau $D_i$ selon l'équation (11) en effectuant $D_i = \left( \left( \sqrt{\alpha/8N} \right) / \sigma_{d,i} \right) \lambda$

**Etape (T-2D) n°4** : Calcul de la matrice de corrélation $\mathbf{D}_{pp}^{directif}$ en utilisant (12)

$$\mathbf{D}_{pp}^{directif} = \left(D_1\right)^2 \mathbf{k}_2\left(\theta_m + \frac{\pi}{2}, 0\right) \mathbf{k}_2\left(\theta_m + \frac{\pi}{2}, 0\right)^H + \left(D_2\right)^2 \mathbf{k}_2\left(\theta_m, 0\right) \mathbf{k}_2\left(\theta_m, 0\right)^H$$

$$(26) \quad .$$

(Les directions des Axes de l'ellipse d'incertitude sont données par le cahier des charges avec $\theta_{directif} = \theta_m + \dfrac{\pi}{2}$ qui donne la direction dans laquel la précision en azimut est minimale)

Etape (T-2D) n°5 : Calcul de la position des capteurs du réseau directif en effectuant

$$\mathbf{p}_{2,n}^{directif} = \left(\mathbf{D}_{pp}^{directif}\right)^{1/2} \mathbf{D}_{pp}^{-1/2} \left(\mathbf{p}_{2,n} - \overline{\mathbf{p}}\right)$$

$$(27) \quad .$$

Le réseau donnant les perfomances est déterminé à partir de la position des capteurs trouvés à l'étape (27)

Dans le cas du réseau 3-D, la condition de l'équation (21) est vérifiée lorsque $\mathbf{h}_i$ est orthogonal à $\mathbf{k}\left(\theta_m + \dfrac{\pi}{2}, 0\right)$ ou $\mathbf{k}\left(\theta_m, \Delta_m + \dfrac{\pi}{2}\right)$. En posant $\mathbf{h}_1 = \mathbf{k}\left(\theta_m + \dfrac{\pi}{2}, 0\right)$, $\mathbf{h}_2 = \mathbf{k}\left(\theta_m, \dfrac{\pi}{2}\right)$ et $\mathbf{h}_3 = \mathbf{k}(\theta_m, 0)$, on obtient pour $\Theta_m = \{\theta_m, \Delta_m\}$

$$\mathrm{MS}_{\Theta_m = \{\theta_m, \Delta_m\}} = \left(\sigma_{\theta_1}\right)^2 \mathbf{e}_\theta \mathbf{e}_\theta^H + \left(\sigma_{\Delta_1}\right)^2 \mathbf{e}_\Delta \mathbf{e}_\Delta^H \quad \text{avec} \begin{cases} \sigma_{\theta_1} = \dfrac{\sigma_{d,1}}{|\cos(\Delta_m)|} \\ \sigma_{\Delta_1} = \sqrt{\left(\sigma_{d,2}\right)^2 \cos(\Delta_m)^2 + \left(\sigma_{d,3}\right)^2 \sin(\Delta_m)^2} \end{cases} \quad (28)$$

Et pour $\Theta_m = \{\theta_m + \pi/2, \Delta_m\}$

$$MS_{\Theta_m = \left\{\theta_m + \frac{\pi}{2}, \Delta_m\right\}} = \left(\sigma_{\theta_2}\right)^2 \mathbf{e}_\theta \mathbf{e}_\theta^H + \left(\sigma_{\Delta_2}\right)^2 \mathbf{e}_\Delta \mathbf{e}_\Delta^H \quad avec \begin{cases} \sigma_{\theta_2} = \dfrac{\sigma_{d,3}}{\left|\cos\left(\Delta_m\right)\right|} \\[2mm] \sigma_{\Delta_2} = \sqrt{\left(\sigma_{d,1}\right)^2 \sin\left(\Delta_m\right)^2 + \left(\sigma_{d,2}\right)^2 \cos\left(\Delta_m\right)^2} \end{cases} \tag{29}$$

D'après (28)(29) en fixant l'élévation à $\Delta_m$, on peut montrer que l'écart type $\sigma_\theta$ vérifie

$$\sigma_{\theta_{min}} \leq \sigma_\theta \leq \sigma_{\theta_{max}} \quad avec \begin{cases} \sigma_{\theta_{min}} = \dfrac{\sigma_{d,1}}{\left|\cos\left(\Delta_m\right)\right|} \\[2mm] \sigma_{\theta_{max}} = \dfrac{\sigma_{d,3}}{\left|\cos\left(\Delta_m\right)\right|} \end{cases} \tag{30}$$

Lorsque $\sigma_{d,1} \leq \sigma_{d,3}$. On remarque de plus que $\sigma_{\Delta_1} = \sigma_{\Delta_2} = \sigma_{d,2}$ en $\Delta_m = 0$. Un processus de transformation d'un réseau quelconque en un réseau directif peut alors être envisagé et défini dans un cahier des charges. Le cahier des charges peut donner les valeurs minimale et maximale $\sigma_{\theta min}$ et $\sigma_{\theta max}$ de la précision en azimut à l'élévation $\Delta_m$ ainsi qu'une précision $\sigma_\Delta$ en $\Delta_m = 0$. Le cahier des charges donne l'azimut $\theta_{directif} = \theta_m + \dfrac{\pi}{2}$ pour lequel la précision en azimut $\sigma_{\theta min}$ est minimal. En conséquence les étapes de transformation d'un réseau initial de dimension 3- D composé de $N$ capteurs de position $\mathbf{p}_{3,n}$ en un réseau de directivité choisi sont alors les suivantes :

Etape (T-3D) n°1 : Calcul de la matrice de corrélation $D_{pp}^{init}$ des $\mathbf{p}_{3,n}$ selon l'équation (9).
Etape (T- 3D) n° 2 : Calcul de $\sigma_{d,1} = \sigma_{\theta min} |\cos(\Delta_m)|$ et $\sigma_{d,3} = \sigma_{\theta max}|\cos(\Delta_m)|$ en utilisant (30) .
Etape (T-3D) n° 3: Calcul de $\sigma_{d,2} = \sigma_\Delta$ pour que la précision en élévation en $\Delta_m = 0$ soit $\sigma_\Delta$.

Etape (T-3D) n°4 : Calcul des tailles de réseau $D_i$ selon l'équation (11) en effectuant $D_i = \left(\left(\sqrt{\alpha/8N}\right)/\sigma_{d,i}\right)\lambda$

Etape (T-3D) n°5 : Calcul de la matrice de corrélation $\mathbf{D}_{pp}{}^{directif}$ en utilisant (12)

$$\mathbf{D}_{pp}{}^{directif} = \left(D_1\right)^2 \mathbf{k}\left(\theta_m + \frac{\pi}{2}, 0\right)\mathbf{k}\left(\theta_m + \frac{\pi}{2}, 0\right)^H + \left(D_2\right)^2 \mathbf{k}\left(\theta_m, \frac{\pi}{2}\right)\mathbf{k}\left(\theta_m, \frac{\pi}{2}\right)^H$$
$$+ \left(D_3\right)^2 \mathbf{k}\left(\theta_m, 0\right)\mathbf{k}\left(\theta_m, 0\right)^H \tag{31} .$$

(Les directions des Axes de l'ellipse d'incertitude sont données par le cahier des charges avec $\theta_{directif} = \theta_m + \dfrac{\pi}{2}$ qui donne la direction dans laquel la précision en azimut est minimale)
Etape (T-3D) n°6 : Calcul de la position des capteurs du réseau directif en effectuant

$$\mathbf{p}_{3,n}{}^{directif} = \left(\mathbf{D}_{pp}{}^{directif}\right)^{1/2} \mathbf{D}_{pp}{}^{-1/2}\left(\mathbf{p}_{3,n} - \overline{\mathbf{p}}\right) \tag{32}$$

Le réseau optimal est défini à partir des positions des capteurs trouvés à cette étape.

**Processus de transformation d'un réseau 3-D en un réseau de directif**

<u>Dans le cas du réseau 1-D</u>, on est dans un cas dégénéré car il faut fixer un des deux paramètres azimut ou élévation. Dans ce cas deux situations d'optimisation de réseau sont envisagées :

- Cas où l'élévation est fixée à $\Delta_0$
- Cas où l'azimut est fixé à $\theta_0$

Lorsque l'élévation est fixée à $\Delta_0$ un cahier des charges donne la précision en azimut $\sigma_\theta$. En conséquence les étapes de transformation d'un réseau initial de dimension 1-D composé de $N$ capteurs de position $\mathbf{p}_{1,n}$ en un réseau de précision choisie sont alors les suivantes :

**Etape (T-1D-$\theta$) n° 1** : Calcul de la matrice de corrélation $\overline{D_{pp}^{init}} = D_{pp}^{init}$ des $\mathbf{p}_{1,n}$ selon l'équation (9).

**Etape (T- 1D- $\theta$) n° 2** : Calcul de $\sigma_{d,1} = \sigma_\theta |\cos(\Delta_0) \sin(\theta_m)|$ en utilisant les données contenues dans le Tableau 4.

**Etape (T-1D-$\theta$) n° 3** : Calcul des tailles de réseau $D_1$ selon l'équation (11) en effectuant $D_1 = \left(\left(\sqrt{\alpha/8N}\right)/\sigma_{d,1}\right)\lambda$

**Etape (T-1D-$\theta$) n° 4** : Calcul de la matrice de corrélation $\mathbf{D}_{pp}^{directif} = D_{pp}^{directif}$ en utilisant (12)

$$D_{pp}^{directif} = \left(D_1\right)^2$$

$$(33) \quad .$$

**Etape (T-1 D-$\theta$) n° 5** : Calcul de la position des capteurs du réseau directif en effectuant

$$\mathbf{p}_{1,n}^{directif} = \sqrt{\frac{D_{pp}^{directif}}{D_{pp}}}\left(\mathbf{p}_{1,n} - \overline{\mathbf{p}}\right) \qquad (34)$$

Déterminer un réseau comprenant des capteurs définis par ces positions

**Processus de transformation d'un réseau 1-D lorsque l'élévation est fixée**

Lorsque l'azimut est fixé à $\theta_0$, un cahier des charges donne la précision en élévation $\sigma_\Delta$. En conséquence les étapes de transformation d'un réseau initial de dimension 1-D composé de $N$ capteurs de position $\mathbf{p}_{1,n}$ en un réseau de précision choisie sont alors les suivantes :

**Etape (T-1D-) n° 1** : Calcul de la matrice de corrélation $\mathbf{D}_{pp} = D_{pp}$ des $\mathbf{p}_{1,n}$ selon l'équation (9).

**Etape (T- 1D- $\Delta$) n°2** : Calcul de $\sigma_{d,1} = \sigma_\Delta |\sin(\Delta_m) \cos(\theta_0)|$ en utilisant Tableau 4.

**Etape (T-1 D-$\Delta$) n° 3** : Calcul des tailles de réseau $D_1$ selon l'équation (11) en effectuant

$$D_1 = \left(\left(\sqrt{\alpha/8N}\right)/\sigma_{d,1}\right)\lambda$$

**Etape (T-1D-$\Delta$) n° 4** : Calcul de la matrice de corrélation $\mathbf{D}_{pp}^{directif} = D_{pp}^{directif}$ en utilisant (12)

$$D_{pp}^{directif} = \left(D_1\right)^2$$

$$(35) \quad .$$

**Etape (T-1D-Δ) n° 5**: Calcul de la position des capteurs du réseau directif en effectuant

$$\mathbf{p}_{1.n}^{\ directif} = \sqrt{\dfrac{D_{pp}^{\ directif}}{D_{pp}}}\left(\mathbf{p}_{1,n} - \bar{\mathbf{p}}\right)$$

Déterminer un réseau comprenant des capteurs définis par ces positions (36).

**Processus de transformation d'un réseau 1-D lorsque l'azimut est fixé**

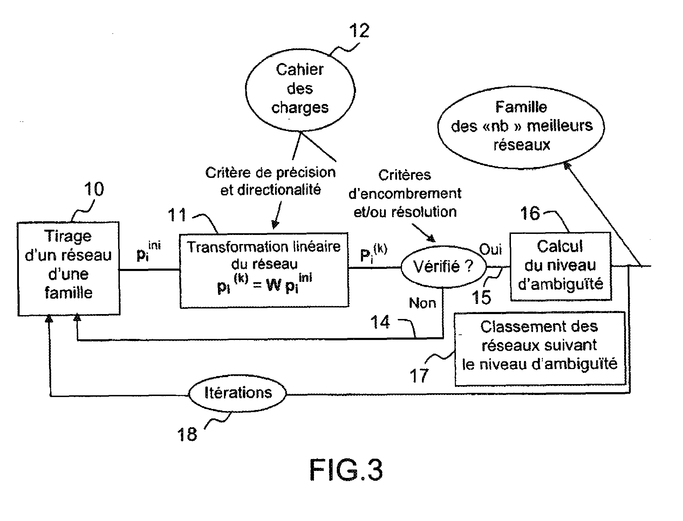

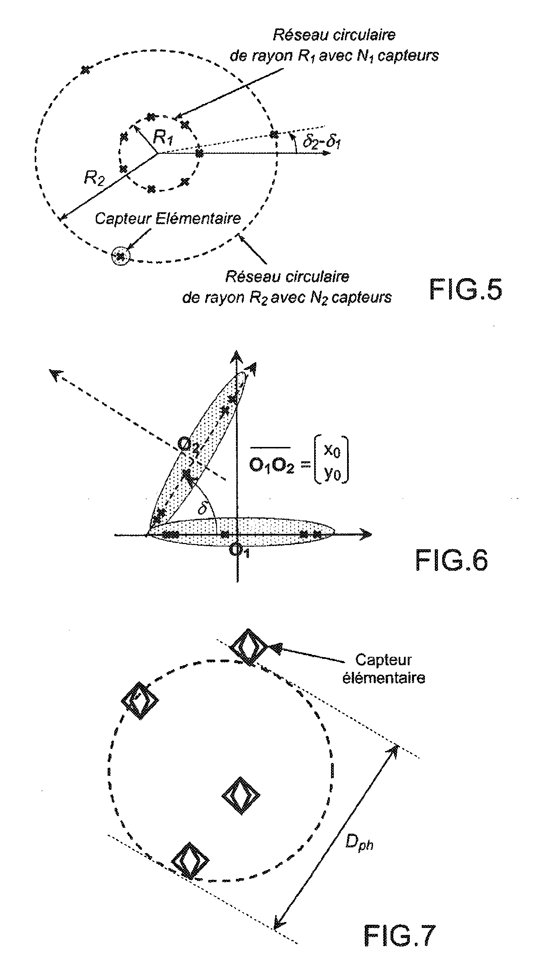

La figure 3 représente un schéma fonctionnel du procédé selon l'invention. Ainsi, la première étape consiste à réaliser le tirage au hasard d'un réseau dans une famille de réseau de capteurs, 10, ce qui conduit à disposer d'une matrice de corrélations des positions $\mathbf{p}_n$ initiales des capteurs que l'on note $\mathbf{p}_n^{ini}$, puis l'étape suivante 11, consiste à effectuer une transformation linéaire du réseau initial en tenant compte des contraintes techniques données dans le cahier des charges 12 (par exemple une ouverture physique maximale), ce qui génère une matrice composée des positions des capteurs $\mathbf{p}_i^{(k)}$. Une étape suivante 13 peut consister à vérifier si d'autres critères imposés dans le fonctionnement du système, par exemple les critères techniques d'encombrement et/ou de résolution et/ou de précision (par exemple un rapport d'omnidirectionnalité $\sigma_{\theta_{max}}$, /$\sigma_{\theta_{min}}$ inférieur à une valeur $\rho_\theta$ ou encore un $\sigma_{\theta_{max}}$ borné par une valeur maximal donnée dans le cahier des charges) sont vérifiés. Si ces critères ne sont pas vérifiés, 14, alors le procédé va procéder au tirage d'un autre réseau de la famille et va lui appliquer toutes les étapes du procédé. Si au contraire, les critères sont respectés, 15, alors le procédé va effectuer un calcul du niveau d'ambiguïté 16 et classer 17 les réseaux suivant, par exemple, le niveau d'ambiguïtés. Le procédé va exécuter des itérations 19, pour trouver les meilleurs réseaux des réseaux qui ont des caractéristiques identiques en terme de précision, résolution, etc .. en ayant des caractéristiques différentes en ambiguïté. Le tirage dépend de la famille de réseau. Par exemple si on prend les réseaux en V de la figure 6 ou l'angle initial est fixé à δ, le réseau initial est composé de deux branches identiques dont la répartition des capteurs suit une loi normal.

A ce niveau, le procédé a déterminé un ensemble des « nb » meilleurs réseaux appartenant à une famille de réseau, c'est-à-dire la position de capteurs dans un réseau. Les meilleurs réseaux sont les réseaux les moins ambiguës qui vérifient les performances du cahier des charges. La suite du procédé comprend, par exemple, l'intégration d'éventuelles contraintes supplémentaires pouvant être des critères d'encombrement, des critères de résolution, ou encore d'autres critères relatifs au réseau de capteurs. Le processus qui vient d'être décrit peut aussi être mis en oeuvre avec une contrainte d'encombrement maximal donné dans le cahier des charges.

**Outil de résolution**

Dans ce paragraphe, un critère permettant de quantifier la capacité de résolution d'un réseau est construit. Ce critère est, par exemple, établi à partir des performances de résolution de l'algorithme connu MUSIC en présence de deux sources. En présence de $M=2$ sources, la méthode MUSIC appliquée aux observations de l'équation (1) a pour objectif de chercher les $M=2$ minima du critère $J(\Theta)$ tels que

$$\left\{\hat{\Theta}_1 \text{ et/ou } \hat{\Theta}_2\right\} = \min_\Theta J\left(\Theta\right) \quad \text{avec } J\left(\Theta\right) = \frac{\mathbf{a}(\Theta_m)^H \hat{\Pi}_b \mathbf{a}(\Theta_m)}{\mathbf{a}(\Theta_m)^H \mathbf{a}(\Theta_m)} \tag{37}$$

Où $\hat{\Pi}_b$ est le projecteur bruit de la matrice de covariance $\hat{R}_{xx}$ tel que

$$\hat{\mathbf{R}}_{xx} = \frac{1}{K}\sum_{k=1}^{K} \mathbf{x}\left(t_k\right)\mathbf{x}\left(t_k\right)^H = \sum_{i=1}^{N} \lambda_i \mathbf{e}_i \mathbf{e}_i^{\ H}$$

$$\hat{\Pi}_b = \sum_{i=3}^{N} \mathbf{e}_i \mathbf{e}_i^{\ H} \tag{38}$$

Où $\lambda_1 > \cdots > \lambda_N$ sont les valeurs propres avec $\lambda_i$ la valeur propre associé au vecteur propre $\mathbf{e}_i$. On considère que deux sources sont résolues, par exemple, lorsque

$$\overline{J}_{moy} - x\sigma_{moy} > \overline{J}_{12} + x\sigma_{12}$$

$$\text{où} \begin{cases} \overline{J}_{moy} = \mathrm{E}\left[ J_{moy} \right] \\ \overline{J}_{12} = \mathrm{E}\left[ J_{12} \right] \\ \left( \sigma_{moy} \right)^2 = \mathrm{E}\left[ J_{moy}^{\;2} \right] - \left( \overline{J}_{moy} \right)^2 \\ \left( \sigma_{12} \right)^2 = \mathrm{E}\left[ J_{moy}^{\;2} \right] - \left( \overline{J}_{12} \right)^2 \end{cases} \text{sachant que} \begin{cases} J_{12} = \dfrac{J(\Theta_1) + J(\Theta_2)}{2} \\ J_{moy} = J\left( \dfrac{\Theta_1 + \Theta_2}{2} \right) \end{cases} \quad (39)$$

Où $(\overline{J}_{moy}, \sigma_{moy})$ représente la moyenne et l'écart type du critère de MUSIC sur l'incidence moyenne et $(\overline{J}_{12}, \sigma_{12})$ représente la moyenne et l'écart type de $J_{12} = (J(\Theta_1) + J(\Theta_2)) / 2$. On sait qu'en l'absence d'erreur de modèle pour $K$ infini $J_{12} = 0$ et $J_{moy} > J_{12}$. On définit la distance entre deux sources d'incidence $\Theta_1$ et $\Theta_2$ par

$$\Delta_{12} = \sqrt{\left( \mathbf{k}_{12} \right)^H \left( \mathbf{k}_{12} \right)} \ \text{avec} \ \mathbf{k}_{12} = \mathbf{k}(\Theta_1) - \mathbf{k}(\Theta_2) = \Delta_{12} \mathbf{k}\left( \Psi_{orientation} \right) \quad (40)$$

Où $\Psi_{orientation}$ est l'angle d'orientation entre les deux sources. Pour un réseau 2-D $\Psi_{orientation} = \{\alpha, 0\}$ où $\alpha$ est un angle d'orientation dans le plan azimutal et pour un réseau 3-D $\Psi_{orientation} = \{\alpha, \beta\}$ où $\beta$ est un angle d'orientation de type élévation dans la direction $\alpha$. La limite de résolution $\Delta_{12}^{lim}$ est la valeur minimale de $\Delta_{12}$ dans la direction $\Psi_{orientation}$ pour laquelle la condition (39) est vérifiée. L'expression de la limite de résolution est la suivante

$$\Delta_{12}^{\;lim} = \frac{\sqrt{2}}{\pi \dfrac{D_{pp}\left( \Psi_{orientation} \right)}{\lambda}} \sqrt{\frac{x\sigma_{erreur}}{\sqrt{N\left( \rho\left( \Psi_{orientation} \right)^2 - 1 \right)}}} \quad (41)$$

Où les valeurs de $\sigma_{erreur}$ résumées dans le tableau suivant dépendent du type de performances considérées.

**Tableau 5 - Valeur du $\sigma_{erreur}$ du critère de résolution en fonction du type de performances**

| Type de Performances | | Valeur du coefficient $\alpha$ |
|---|---|---|
| **Performance de MUSIC** | *A temps d'intégration fini avec* $\mathbf{x}(t_k)$ pour $1 \leq k \leq K$ | $\sigma_{erreur}^{\;2} = \dfrac{1}{K\left(1 - r_{12}^{\;2}\right)}\left( \dfrac{1}{2}\left( \dfrac{1}{\rho_1} + \dfrac{1}{\rho_2} \right) + \dfrac{r_{12}}{\sqrt{\rho_1 \rho_2}} \right)$ <br><br> $\rho_m$ : Rapport signal sur bruit de la $m^{ième}$ source <br> $r_{12}$ : Corrélation temporelle des sources |
| | *En présence d'erreur de modèle* | $\sigma_{erreur}^{\;2} = \dfrac{E\left[ \mathbf{e}_m^{\;H} \mathbf{e}_m \right]}{N}$ |

Les paramètres $D_{pp}(\Psi_{orientation})$ et $\rho(\Psi_{orientation})$ sont liés de la manière suivante aux statistiques d'ordre 2 et 4 de la répartition des capteurs

$$D_{pp}\left(\Psi_{orientation}\right) = \frac{1}{N}\sum_{n=}^{N} d_n\left(\Psi_{orientation}\right)^2$$

$$\rho\left(\Psi_{orientation}\right)^2 = \frac{\frac{1}{N}\sum_{n=}^{N} d_n\left(\Psi_{orientation}\right)^4}{D_{pp}\left(\Psi_{orientation}\right)^2} \qquad (42)$$

$$d_n\left(\Psi\right) = \mathbf{k}_d\left(\Psi\right)^H\left(\mathbf{p}_{d,n} - \bar{\mathbf{p}}\right)$$

Les positions $d_n\left(\Psi\right)$ sont les positions des capteurs projetés sur un axe d'orientation $\mathbf{k}_d(\Psi_{orientation})$. L'expression (41) permet de

- Définir une omnidirectionnalité en résolution pour un réseau $d$- D : Le coefficient $\rho\left(\Psi_{orientation}\right)$ est indépendant de la direction $\Psi$. Un réseau circulaire uniforme est omni- directionnel en résolution avec $\rho\left(\Psi_{orientation}\right)^2 = \mathbf{1.5}$.

- Définir un critère de pouvoir de résolution où $\mathbf{1}/ (\rho\left(\Psi_{orientation}\right)^2 - 1)$ doit être proche de 0.

Dans la suite du paragraphe des critères plus précis sont établis sur l'omnidirectionalité en résolution et la capacité de résolution. Les expressions de $D_{pp}\left(\Psi_{orientation}\right)$ et $\rho\left(\Psi_{orientation}\right)$ de l'expression (42) peuvent s'écrire :

$$D_{pp}\left(\Psi_{orientation}\right) = \mathbf{k}_d\left(\Psi_{orientation}\right)^H \mathbf{D}_{pp}\mathbf{k}_d\left(\Psi_{orientation}\right)$$

$$\rho\left(\Psi_{orientation}\right)^2 = \frac{\mathbf{k}_d\left(\Psi_{orientation}\right)^{\otimes 2H} \mathbf{Q}_{pp}\mathbf{k}_d\left(\Psi_{orientation}\right)^{\otimes 2}}{D_{pp}\left(\Psi_{orientation}\right)^2} \qquad (43)$$

$$\mathbf{Q}_{pp} = \frac{1}{N}\sum_{n=1}^{N}\left(\mathbf{p}_{d,n} - \bar{\mathbf{p}}\right)^{\otimes 2}\left(\mathbf{p}_{d,n} - \bar{\mathbf{p}}\right)^{\otimes 2H}$$

Où $\mathbf{D}_{pp}$ est la matrice de covariance des positions définie par l'équation (9), $\otimes$ est le produit de Kronecker et $\mathbf{k}^{\otimes 2} = \mathbf{k}\otimes\mathbf{k}$. Plus précisément le coefficient $\rho\left(\Psi_{orientation}\right)^2$ est le rapport de forme quadratique suivant

$$\rho\left(\Psi_{orientation}\right)^2 = \frac{\tilde{\mathbf{k}}_d^{\otimes 2H}\tilde{\mathbf{Q}}_{pp}\tilde{\mathbf{k}}_d^{\otimes 2}}{\tilde{\mathbf{k}}_d^{\otimes 2H}\tilde{\mathbf{k}}_d^{\otimes 2}} \quad \text{avec} \begin{cases} \tilde{\mathbf{Q}}_{pp} = \left(\mathbf{D}_{pp}^{-1/2} \otimes \mathbf{D}_{pp}^{-1/2}\right)^H \mathbf{Q}_{pp}\left(\mathbf{D}_{pp}^{-1/2} \otimes \mathbf{D}_{pp}^{-1/2}\right) \\ \tilde{\mathbf{k}}_d = \mathbf{D}_{pp}^{1/2}\mathbf{k}_d\left(\Psi_{orientation}\right) \\ \mathbf{D}_{pp} = \mathbf{D}_{pp}^{1/2}\left(\mathbf{D}_{pp}^{1/2}\right)^H \end{cases} \qquad (44)$$

On peut alors définir des critères d'omnidirectionalité et de pouvoir de résolution à partir des valeurs propres suivantes de la matrice $\tilde{\mathbf{Q}}_{pp}$ de l'équation (44).

$$\tilde{\mathbf{Q}}_{pp} = \sum_{i=1}^{d\times d} Q_i \mathbf{v}_i\left(\mathbf{v}_i\right)^H \qquad (45)$$

Où les valeurs $Q_i$ sont les valeurs propres associées aux vecteurs propres $\mathbf{v}_i$. Le critère d'omnidirectionnalité en résolution est le suivant

$$R_{omni} = \frac{\max_{\Psi} \rho(\Psi)^2}{\min_{\Psi} \rho(\Psi)^2} = \frac{\max_i Q_i}{\min_i Q_i} \qquad (46)$$

En conséquence le réseau est omnidirectionnel lorsque $R_{omni}$ est minimal, c'est à dire que $R_{omni}$ =1. Sachant qu'un réseau aura un fort pouvoir de résolution lorsque $|\rho (\Psi_{orientation})^2- 1|$ est grand, on définit alors le pouvoir de résolution par

$$R_{power} = \min_{\Psi} \left| \rho(\Psi)^2 - 1 \right| = \min_i \left| Q_i - 1 \right| \quad (46')$$

En conséquence les critères de résolution sont liés aux statistiques d'ordre 4 de la répartition des capteurs $\mathbf{Q}_{pp}$. Dans un processus d'optimisation de réseau, l'objectif sera de minimiser le critère $\boldsymbol{R}_{omni}$ et de maximiser $\boldsymbol{R}_{power}$. Les calculs de ces deux  critères à partir des positions $\mathbf{p}_{d,n}$ des capteurs d'un réseau sont résumés dans les étapes suivantes :

   **Etape n°1 (Res)** : A partir des positions des capteurs $\mathbf{p}_{d,n}$ calcul de $\mathbf{D}_{pp}$ selon (9).
   **Etape n°2 (Res)** : A partir des $\mathbf{p}_{d,n}$ calcul de $\mathbf{Q}_{pp}$ selon (43).
   **Etape n°3 (Res)** : A partir de $\mathbf{D}_{pp}$ et $\mathbf{Q}_{pp}$, calcul de $\tilde{\mathbf{Q}}_{pp}$ selon (44).
   **Etape n°4 (Res)**: Décomposition en éléments propres de $\tilde{\mathbf{Q}}_{pp}$ soit:

$$\left| \quad \tilde{\mathbf{Q}}_{pp} = \sum_{i=1}^{d \times d} Q_i \mathbf{v}_i (\mathbf{v}_i)^H \right. .$$

   **Etape n°5 (Res)** : Calcul du critère d'omnidirectionalité en résolution $\boldsymbol{R}_{omni}$ selon (46) à partir des $Q_i$.
   **Etape n°6 (Res)** : Calcul du pouvoir de résolution $R_{power}$ selon (46') à partir des $Q_i$.

Processus de calcul de critères permettant d'optimiser le pouvoir de **résolution ainsi que l'omni-directionalité en résolution**

**Ambiguïté de réseau**

L'objectif est d'établir un contraste entre le niveau des lobes principaux et celui des lobes secondaires du critère MUSIC ou d'un autre critère équivalent. La goniométrie est ambiguë lorsque l'algorithme donne les incidences d'un des lobes secondaires à la place de l'un des lobes principaux. Les critères d'ambiguïtés se feront dans l'espace des composantes du vecteur d'onde.

**Ambiguïtés d'ordre 1**

En présence d'une source d'incidence $\Theta_1$, un réseau est mathématiquement ambigu à l'ordre 1 lorsqu'il existe une incidence $\Theta$ pour laquelle les vecteurs $\mathbf{a}(\mathbf{k}_d(\Theta_1))$ et $\mathbf{a}(\mathbf{k}_d(\Theta))$ snt colinéaires. Dans ces conditions la projection du vecteur directeur $\mathbf{a}(\Theta)$ sur le vecteur $\mathbf{a}(\Theta_1)$ est maximale

$$Diag_{\lambda}\left(\mathbf{a}_{\lambda}\left(\mathbf{k}_d(\Theta_1)\right), \mathbf{k}_d(\Theta)\right) = 1 = \frac{\mathbf{a}_{\lambda}\left(\mathbf{k}_d(\Theta)\right)^H \Pi\left(\mathbf{a}_{\lambda}\left(\mathbf{k}_d(\Theta_1)\right)\right)\mathbf{a}_{\lambda}\left(\mathbf{k}_d(\Theta)\right)}{N} \qquad (47)$$

où 1- $Diag_{\lambda}(\mathbf{a}(\mathbf{k}_1), \mathbf{k}_2)$ est une distance entre les vecteurs $\mathbf{a}(\mathbf{k}_1)$ et $\mathbf{a}(\mathbf{k}_2)$
où $\Pi(\mathbf{A})$ est le projecteur sur l'espace engendré par les colonnes de $\mathbf{A}$ tel que

$$\Pi(\mathbf{A}) = \mathbf{A}\left(\mathbf{A}^H \mathbf{A}\right)^{-1} \mathbf{A}^H \qquad (48)$$

et où $\mathbf{a}_\lambda$ (*u*, *v*) est le vecteur directeur pour la longueur d'onde $\lambda$ tel que

$$\mathbf{a}_\lambda\left(\mathbf{k}_d\right) = \begin{bmatrix} a_{1\lambda}\left(\mathbf{k}_d\right) \\ \vdots \\ a_{N\lambda}\left(\mathbf{k}_d\right) \end{bmatrix} \text{ avec } a_{n\lambda}\left(\mathbf{k}_d\right) = \exp\left( j\frac{2\pi}{\lambda}\mathbf{k}_d{}^T\mathbf{p}_{d.n} \right) \tag{49}$$

Comme $Diag_\lambda$ (**A**, $\mathbf{k}_d$ ($\Theta$) ) est compris entre 0 et 1 et qu'il existe une ambiguïté mathématique lorsque $Diag_\lambda$ (**A**, $\mathbf{k}_d$ ($\Theta$) ) =1 (la distance entre **a** ($\mathbf{k}_d$ ($\Theta$) ) et **A** est nulle), le critère de robustesse aux ambiguïtés d'ordre 1 noté $\eta_1$ ($\lambda$) dépendant de la longueur d'onde $\lambda$ de la manière suivante :

$$\eta_1\left(\lambda\right) = \min_{\Theta_1} \eta_1\left(\lambda,\Theta_1\right)$$
$$\eta_1\left(\lambda,\Theta_1\right) = \min_{\substack{\mathbf{k}_d \\ \mathbf{k}_d{}^H\mathbf{k}_d \leq 1}} \left(1 - Diag_\lambda\left(\mathbf{a}_\lambda\left(\mathbf{k}_d\left(\Theta_1\right)\right),\mathbf{k}_d\right)\right) \tag{50}$$

car $\mathbf{k}_d(\Theta)$ $^H\mathbf{k}_d(\Theta) \leq 1$. D'un point de vue pratique, on considère que les ambiguïtés d'ordre 1 sont faibles lorsque $\eta_1$ ($\lambda$) <0.1.

**Méthode classique pour obtenir $\eta_1$ ($\lambda$) selon l'art antérieur**

La méthode classique selon l'art antérieur pour obtenir la robustesse aux ambiguïtés consiste à tirer aléatoirement des incidences $\Theta_1{}^k$ et à calculer le critère suivant

$$\eta_1\left(\lambda\right)^k = \eta_1\left(\lambda,\Theta_1{}^k\right) \text{ pour } 1 \leq k \leq nb \tag{51}$$

Où *nb* est le nombre de réalisations permettant d'établir la fonction de répartition de $\eta_1$ ($\lambda$)$^k$. La robustesse aux ambiguïtés d'ordre 1 $\eta_1$ ($\lambda$) pour la longueur d'onde $\lambda$ doit alors vérifier

$$\Pr\left(\eta_1\left(\lambda\right)^k < \eta_1\left(\lambda\right)\right) = p_{fa} \text{ pour } 1 \leq k \leq nb \tag{52}$$

Où Pr(.) est une probabilité et où $p_{fa}$ vaut typiquement 5%.

**Méthode optimisée pour obtenir $\eta_1$, ($\lambda$) selon l'invention**

Comme l'optimisation de réseau consiste à chercher le meilleur réseau dans une bande de fréquence large, on souhaite obtenir en une seule fois toutes les valeurs de $\eta_1$ (*c/f*) pour $f_{min} \leq f \leq f_{max}$ où $f_{min}$ et $f_{max}$ sont les fréquences minimales et maximales d'utilisation d'un réseau. L'optimisation qui va être décrite plus loin est basée sur le fait que

$$Diag_\lambda\left(\mathbf{a}_\lambda\left(\mathbf{k}_d\left(\Theta_1\right)\right),\mathbf{k}_d\right) = \frac{\left|\sum_{n=1}^{N}\exp\left(j\frac{2\pi}{\lambda}\left(\mathbf{k}_d\left(\Theta_1\right)-\mathbf{k}_d\right)^T\mathbf{p}_{d,n}\right)\right|^2}{N^2} \tag{53}$$

On en déduit tout d'abord la *propriété n°1* suivante

$$Diag_\lambda\left(\mathbf{a}_\lambda\left(\mathbf{k}_d\left(\Theta_1\right)\right),\mathbf{k}_d\right) = Diag_\lambda\left(\mathbf{a}_\lambda\left(\mathbf{0}_d\right),\Delta\mathbf{k}\right)$$
$$\Delta\mathbf{k} = \mathbf{k}_d - \mathbf{k}_d\left(\Theta_1\right) \tag{54}$$

Où $\mathbf{0}_d = [0 \cdots 0]^T$. Sachant que $\mathbf{k}_d(\Theta_1)^H \mathbf{k}_d(\Theta_1) \leq 1$ et que $\mathbf{k}_d^H \mathbf{k}_d \leq 1$, on en déduit que

$$\Delta\mathbf{k}^H \Delta\mathbf{k} \leq 2 \qquad (55)$$

Ou bien $\Delta\mathbf{k}^H \Delta\mathbf{k}$ la distance au carré entre $\mathbf{k}_d$ et $\mathbf{k}_d(\Theta_1)$ est bornée par (2) (56)

En conséquence on obtient $\eta_1(\lambda)$ en effectuant

$$\eta_1(\lambda) = \min_{\substack{\Delta\mathbf{k} \\ \Delta\mathbf{k}^H \Delta\mathbf{k} \leq 2}} \left( 1 - Diag_\lambda\left(\mathbf{a}_\lambda(\mathbf{0}_d), \Delta\mathbf{k}\right) \right) \qquad (57)$$

De l'équation (53) on en déduit la ***propriété n°2*** suivante

$$Diag_{\lambda\alpha}\left(\mathbf{a}_{\lambda\alpha}\left(\mathbf{k}_d(\Theta_1)\right), \mathbf{k}_d\right) = Diag_\lambda\left(\mathbf{a}_\lambda\left(\frac{\mathbf{k}_d(\Theta_1)}{\alpha}\right), \frac{\mathbf{k}_d}{\alpha}\right) \qquad (58)$$

On en déduit que

$$\eta_1\left(\lambda = \frac{c}{f}\right) = \min_{\substack{\Delta\mathbf{k} \\ \Delta\mathbf{k}^H \Delta\mathbf{k} \leq 2\frac{f}{f_{max}}}} \left( 1 - Diag_{\lambda_{max}}\left(\mathbf{a}_{\lambda_{max}}(\mathbf{0}_d), \Delta\mathbf{k}\right) \right) \qquad (59)$$

Où $\lambda_{max} = c/f_{max}$ sachant que $f \leq f_{max}$ En conséquence, le critère de robustesse aux ambiguïtés d'ordre 1 dans une gamme de fréquence où $f \leq f_{max}$ est tel que

$$\eta_1^{ambig} = \eta_1(\lambda_{max}) = \min_{\substack{\Delta\mathbf{k} \\ \Delta\mathbf{k}^H \Delta\mathbf{k} \leq 2}} \left( 1 - Diag_{\lambda_{max}}\left(\mathbf{a}_{\lambda_{max}}(\mathbf{0}_d), \Delta\mathbf{k}\right) \right) \qquad (60)$$

Car $\eta_1(\lambda_{max}) \leq \eta_1(\lambda)$ lorsque $f_{max} \geq f$.

**Ambiguïtés d'ordre *P*>1**

Un réseau est mathématiquement ambigu à l'ordre *P* lorsque le vecteur directeur $\mathbf{a}(\mathbf{k}_d(\Theta))$ est engendré par une base de vecteurs directeurs $\mathbf{a}(\mathbf{k}_d(\Theta_1))$ jusqu'à $\mathbf{a}(\mathbf{k}_d(\Theta_P))$. En conséquence la projection suivante du vecteur directeur $\mathbf{a}(\mathbf{k}_d(\Theta))$ sur l'espace engendré par les vecteurs $\mathbf{a}(\mathbf{k}_d(\Theta_p))$ pour $1 \leq p \leq P$ (P vecteurs indicés p) est nulle :

$$Diag_\lambda\left(\mathbf{A}_\lambda(\Phi^P), \mathbf{k}_d(\Theta)\right) = 1 = \frac{\mathbf{a}_\lambda\left(\mathbf{k}_d(\Theta)\right)^H \Pi\left(\mathbf{A}_\lambda(\Phi^P)\right) \mathbf{a}_\lambda\left(\mathbf{k}_d(\Theta)\right)}{N} \qquad (61)$$

où le projecteur $\Pi(\mathbf{A})$ est défini par l'équation (48) et où

$$\mathbf{A}_\lambda(\Phi^P) = \left[\mathbf{a}_\lambda\left(\mathbf{k}_d(\Theta_1)\right) \cdots \mathbf{a}_\lambda\left(\mathbf{k}_d(\Theta_P)\right)\right] \text{ et } \Phi^P = \left\{\mathbf{k}_d(\Theta_1) \cdots \mathbf{k}_d(\Theta_P)\right\} \qquad (62)$$

Comme $Diag_\lambda(\mathbf{A}, \mathbf{k}_d(\Theta))$ est compris entre 0 et 1 et qu'il existe une ambiguïté mathématique lorsque $Diag_\lambda(\mathbf{A}, \mathbf{k}_d(\Theta)) = 1$, on définit la robustesse aux ambiguïtés d'ordre *P* pour la longueur d'onde $\lambda$, par le paramètre $\eta_P(\lambda)$ suivant :

$$\eta_P(\lambda) = \min_{\Phi^P} \eta_P(\lambda, \Phi^P)$$

$$\eta_P(\lambda, \Phi^P) = \min_{\substack{\mathbf{k}_d \\ \mathbf{k}_d{}^H \mathbf{k}_d < 1}} \left(1 - Diag_\lambda\left(\mathbf{A}_\lambda(\Phi^P), \mathbf{k}_d\right)\right) \tag{63}$$

D'un point de vue pratique, on considère que l'on n'a pas d'ambiguïté d'ordre $P$ lorsque $\eta_P(\lambda, \Phi^P) < 0.1$. D'un point de vue statistique on remarque souvent que

$$\eta_P(\lambda) = \frac{\eta_1(\lambda)}{P} \tag{64}$$

L'estimation optimisée de $P=1$ de $\eta_P(\lambda)$ pour toutes les incidences n'est pas applicable pour $P>1$. C'est ainsi que la méthode classique ci-après est appliquée à la fréquence maximale.

Cette méthode consiste à tirer aléatoirement $P$ couples d'incidences $\Phi^{Pk} = \{\mathbf{k}_d(\Theta_1{}^k) \cdots \mathbf{k}_d(\Theta_P{}^k)\}$ pour ensuite calculer

$$\eta_P(\lambda)^k = \eta_P(\lambda, \Phi^{Pk}) \text{ pour } 1 \le k \le nb \tag{65}$$

où $nb$ est le nombre de réalisations permettant d'estimer la fonction de répartition de $\eta_P(\lambda)^k$. La robustesse aux ambiguïtés d'ordre $P$ $\eta_P(\lambda)^k$ pour la longueur d'onde $\lambda$ doit alors vérifier

$$\Pr\left(\eta_P(\lambda)^k < \eta_P(\lambda)\right) = p_{fa} \text{ pour } 1 \le k \le nb \tag{66}$$

où $\Pr(.)$ est une probabilité et où $p_{fa}$ vaut typiquement 5%.

**Conclusion**

Dans le processus d'optimisation de réseau, on estimera les critères d'ambiguïté $\eta_P(\lambda)$ pour chaque réseau où les positions des capteurs sont paramétrés par $\mathbf{p}_n$. Lorsque $P=1$ on dispose d'un seul critère (60) qui permet d'obtenir la robustesse aux ambiguïtés $\eta_1{}^{ambig}$ dans une gamme de fréquence de fréquence maximale $f_{max}$ et indépendamment de la direction des sources.

*Optimisation de réseau*

Le (ou les) processus d'optimisation sont initialisés par des familles de réseaux dont on fait varier les paramètres caractéristiques. Ces réseaux peuvent être

- Des réseaux aléatoires $d$-D (linéaire, plan ou 3-D dans l'espace). La répartition des capteurs suit une loi qui peut être gaussienne, uniforme ou etc..
- Des réseaux 2-D composés de deux sous réseaux 1-D ayant un écart d'orientation de $\delta$. Il s'agit en particulier des réseaux en V figure 5. Ces réseaux ne sont pas tous omnidirectionnels. Le caractère plus ou moins omni-directionnel dépend de la position relative des deux branches linéaires du V ainsi que de l'angle $\delta$ entre les branches.
- Des réseaux 2-D composés de plusieurs cercles concentriques figure 4. Les paramètres caractéristiques sont par exemple les rayons, le nombre de capteurs et l'orientation de chaque cercle. Ces réseaux ont la caractéristique d'être omnidirectionnels en précision. Dans cette famille de réseaux on a les réseaux circulaires uniformes figure 3.
- Les réseaux linéaires 1-d peuvent être

  - Des ULA où les capteurs sont équi-espacés ($p_{1,n} = d(n-1)$)
  - Homothétiques avec $p_{1,n} = d \times \rho^{n-1}$ où $\rho$ est le rapport homothétique
  - Aléatoire

Un cahier des charges peut aussi donner des contraintes d'encombrement comme : l'ouverture physique $D_{ph}$ : Diamètre du plus petit cercle (réseau 2-D voir ou plus petite sphère (réseau 3-D) qui englobe tous les capteurs du réseau. Pour un réseau 1-D il s'agit de la distance entre les deux capteurs les plus éloignés. le processus permettant de calculer l'ouverture physique d'un réseau d-D est décrit ci-après, sachant qu'il est possible de définir un cercle à partir de 3 points et qu'une sphère se construit avec 4 points.

**Etape n°1 (DPH)** : Initialisation : $D_{ph}$ =0
Pour tous les $d$- uplets $\mathbf{p}_{d,ni}$ où ($1 \leq i \leq d$+1) sachant que ($1 \leq n_i \leq N$)
**Etape n°2 (DPH)** : Calcul de

- La distance $Di$ entre les deux capteurs lorsque $d$=1
- Du diamètre $Di$ du cercle passant par les trois capteurs lorsque $d$=2
- Du diamètre $Di$ de la sphère passant par les 4 capteurs lorsque $d$=3

**Etape n°3 (DPH)** : Calcul du centre $\bar{\mathbf{p}}_0$ du cercle ou de la sphère lorsque d>1. Pour d=1 calcul de la position moyenne des deux capteurs
:Si $(\mathbf{p}_{d,n}-\mathbf{p}_0)^H (\mathbf{p}_{d,n} -\mathbf{p}_0) \leq D/2$ pour ($1 \leq n \leq N$) alors $D_{ph}$=D
**Etape n°4 (DPH)** : Passage aux $d$-uplets suivants et retour à l'étape n °2

**Processus de calcul d'une ouverture physique d'un réseau d-D**

- Distance minimael entre capteurs qui peut être due soit à l'encombrement du capteur élémentaire soit à un souhait de minimiser un inter-couplage.
- Zone 1-d, 2-d ou 3-d dans laquelle les capteurs peuvent être installés.

Dans l'exemple de réalisation donné ci-après l'optimisation de réseau prend en compte le critère d'encombrement pour obtenir des réseaux ayant les performances optimales pour l'encombrement donné.

Le processus suivant permet de trouver les $nb$ meilleurs réseaux $d$-D omni-directionnel (ou directionnel) permettant de réaliser une goniométrie $P$ sources à partir :

- d'une ouverture physique $D_{ph}$,
- d'un rapport d'omnidirectionalité maximale $\rho_\theta = \sigma_{\theta_{min}} / \sigma_{\theta_{max}}$
- d'une famille de réseau qui peut être aléatoire ou paramétrée

Ainsi les étapes résumées mises en oeuvre par le procédé selon l'invention sont les suivantes :

**Etape n °B.0** : Initialisation de l'ensemble $\Psi = \varnothing$, $i$=0
Boucle sur un ensemble de $l$ vecteurs de paramètres d'une famille de réseaux
**Etape n°B. 1** : sélectionner par un procédé de tirage un réseau $i$- ième initial $d$- D ($\mathbf{p}_{d,n}^{ini}$ pour ($1 \leq n \leq N$) ) suivant le jeu de paramètres de la famille de réseaux choisis, ledit réseau étant constitué notamment de N capteurs de position $\mathbf{p}_{d,n}$
**Etape n°B.2** : Calcul de l'ouverture physique $D_{ph}^0$ selon les étapes suivantes :

**Etape n°1 (DPH)** : Initialisation : $Dp_h$ =0
Pour tous les $d$- uplets $\mathbf{p}_{d,ni}$ où ($1 \leq i \leq d$ +1) sachant que ($1 \leq n_i \leq N$)
**Etape n°2 (DPH)** : Calcul de

- La distance $Di$ entre les deux capteurs lorsque $d$=1
- Du diamètre $Di$ du cercle passant par les trois capteurs lorsque $d$=2
- Du diamètre $Di$ de la sphère passant par les 4 capteurs lorsque $d$=3

**Etape n°3 (DPH)** : Calcul du centre $\bar{\mathrm{p}}_0$ du cercle ou de la sphère lorsque d>1. Pour d=1 calcul de la position moyenne des deux capteurs
Si $(\mathbf{p}_{d,n}- \mathbf{p}_0)^H (\mathbf{p}_{d,n}- \mathbf{p}_0) \leq D/2$ pour ($1 \leq n \leq N$) alors $D_{ph}$=D
**Etape n°4 (DPH)** : Passage aux $d$-uplets suivants et retour à l'étape n°2

**Etape n°B. 3 :** Transformation du réseau initial en un réseau d'ouverture physique $D_{ph}$ en effectuant : $\mathbf{p}_{d,n} = (D_{ph}/D_{ph}^0)(\mathbf{p}_{d,n}^{ini} - \mathbf{p}_0)$ pour ($1 \leq n \leq N$)
**Etape n°B.4 :**

Calculer les valeurs des tailles de réseau $D_i$ à partir de la valeur de $\mathbf{D}_{pp} = \sum_{i=1}^{d}(D_i)^2 \mathbf{h}_i \mathbf{h}_i^H$ (12) (12) connue, à

partir des valeurs de $D_i$ déterminées, calculer les paramètres $\sigma_{\theta min}$ et $\sigma_{\theta max}$ selon les équations (25) ou (30) en $\Delta_m$ suivant la dimension du réseau,

**Etape n°B.5(Option) :** Si $\sigma_{\theta min}/\sigma_{\theta max} < \rho_\theta$ alors retourner à l'étape n°1 pour le tirage d'un autre réseau avec $i=i+1$.
**Etape n°B.6(Option) :** Si le réseau ne vérifie pas certaines contraintes d'encombrement comme la distance minimale entre 2 capteurs alors retourner à l'étape n°1 pour le tirage d'un autre réseau avec $i=i+1$.
**Etape n°B.7 :** Calcul des paramètres de résolution $R_{omni}$ (facteur d'omni-directionalité en résolution) et $R_{power}$ (Pouvoir de résolution).
**Etape n°B.8(Option) :** Si $R_{omni} > R_{omni}^{max}$ alors retour à l'étape n°1 pour le tirage d'un autre réseau avec $i=i+1$.
**Etape n°B. 9 (Option)** : Si $R_{power} > R_{power}^{max}$ alors retour à l'étape n°1 pour le tirage d'un autre réseau avec $i=i+1$.
**Etape n°8.10(Option) :** Si $\sigma_{\theta max} > \sigma_{\theta max}^{max}$ alors retour à l'étape n°1 pour le tirage d'un autre réseau avec $i=i+1$.
**Etape n°B.11 :** Calcul du critère $\eta_1^{ambig}$ de la robustesse aux ambiguïtés d'ordre 1 de l'équation (59) à partir de la connaissance de $f_{max}$.
**Etape n°B. 12 :** Stockage du réseau $\Psi = \{\Psi(\eta_1^{ambig}, \mathbf{p}_{d,n} \text{ pour } (1 \leq n \leq N))\}$
**Etape n° B. 13 :** Classement des éléments de $\Psi$ suivant le niveau des ambiguïtés d'ordre 1 tel qu'au final $\Psi = \{(\eta_1^{ambig(k)}, \mathbf{p}_{d,n}^{(k)}) \text{ pour } (1 \leq k \leq K) \text{ avec } \eta_1^{ambig(1)} \geq \cdots \geq \eta_1^{ambig(K)}\}$ : Classement du réseau le plus robuste aux ambiguïtés d'ordre 1 au réseau le moins robuste.
**Etape n°B.14 :** $i=i+1$ Si $i<I$ alors retour à l'étape n°1.
**Etape n°B. 15 :** Stockage des $nb$ meilleurs réseaux, c'est-à-dire un ensemble de réseaux composés chacun de N capteurs vis à vis des ambiguïtés d'ordre 1 tel que $\Psi_{opt} \subset \Psi$ avec $\Psi_{opt} = \{(\eta_1^{ambig(k)}, \mathbf{p}_{d,n}^{(k)}) \text{ pour } (1 \leq k \leq nb)\}$
**Etape n°B. 16 :** Calcul des ambiguïtés d'ordre $P$ des réseaux de $\Psi_{opt}$ selon (66) pour obtenir $\Psi_{opt} = \{(\eta_1^{ambig(k)}, \eta_P(c/f_{max})^{(k)}, \mathbf{p}_{d,n}^{(k)}) \text{ pour } (1 \leq k \leq nb)\}$.
**Etape n° B. 17 :** Classement des éléments de $\Psi_{opt}$ suivant le niveau des ambiguïtés d'ordre $P$ tel qu'en final $\Psi_{opt} = \{(\eta_1^{ambig(k)}, \eta_P^{(k)}(c/f_{max}), \mathbf{p}_{d,n}^{(k)}) \text{ pour } 1 \leq k \leq nb) \text{ avec } \eta_P^{(1)} \geq ... \geq \eta_P^{(nb)}\}$ : Classement du réseau le plus robuste aux ambiguïtés d'ordre $P$ au réseau le moins robuste. Eventuellement choix des « meilleurs réseaux ». On retient le réseau dont les positions des capteurs permettant d'obtenir la meilleure performance.

Le procédé selon l'invention permet par rapport à l'art antérieur de résoudre les problèmes suivants :

- la généralisation du calcul des performances en mono-source à une seule expression,
- le calcul de performances mono-source pour des réseaux 2-D, 1-D et 3-D quelconques en fonction de la géométrie du réseau,
- l'établissement d'un critère reliant la résolution de deux sources et la géométrie des capteurs,
- l'établissement d'un critère de directivité pour des réseaux d-D quelconques,
- l'optimisation de réseau de capteurs quelconques à nombre de capteurs fixés à partir d'un cahier des charges donnant la précision mono-source, la résolution sous les contraintes d'encombrement maximal, d'omnidirectionalité ou de zones dans lesquelles les antennes sont installables.

## Revendications

**1.** Procédé pour déterminer la position optimale de capteurs identiques au sein d'un réseau de communications, ledit réseau ayant une dimension d-D ($1 \leq d \leq 3$) destiné à effectuer des mesures de goniométrie consistant à estimer les directions de sources au sein dudit réseau de communications, ledit réseau obtenu par le procédé minimisant les ambiguïtés en tenant compte de paramètres d'un cahier des charges tels que l'ouverture physique $D_{ph}$ d'un réseau, **caractérisé en ce qu'**il comporte au moins les étapes suivantes :

a) - initialisation d'un ensemble $\Psi$ de réseaux et d'une valeur i correspondant à l'indice d'un réseau,

b)- sélectionner par tirage un réseau $i$- ième initial $d$- D ($\mathbf{p}_{d,n}^{ini}$ pour ($1 \leq n \leq N$)) ensemble de N capteurs de positions $\mathbf{p}_{d,ni}$

c) - déterminer l'ouverture physique du réseau sélectionné en exécutant les étapes suivantes :

Etape n°1 (DPH) : initialisation d'une valeur pour l'ouverture physique: $D_{ph}$ =0 pour tous les d-uplets $\mathbf{p}_{d,ni}$ où ($\mathbf{1} \leq d\mathbf{+1}$) sachant que ($\mathbf{1} \leq n_i \leq N$)

Etape n°2 (DPH) : calcul de :

- la distance $Di$ entre les deux capteurs lorsque $d$=1
- du diamètre $Di$ du cercle passant par les trois capteurs lorsque $d$=2
- du diamètre $D$ de la sphère passant par les 4 capteurs lorsque $d$=3

Etape n °3 (DPH) : calcul du centre $\overline{\mathbf{p}}_0$ du cercle ou de la sphère lorsque d>1, pour d=1 calcul de la position moyenne des deux capteurs, si $(\mathbf{p}_{d,n}\text{-}\mathbf{p}_0)^H (\mathbf{p}_{d,n}\text{-}\mathbf{p}_0) \leq D/2$ pour ($1 \leq n \leq N$) alors $D_{ph}$=D

Etape n°4 (DPH) : passage aux $d$-uplets suivants et retour à l'étape n °2 (DPH)

d)- transformation du réseau initial en un réseau d'ouverture physique $D_{ph}$ en effectuant : $\mathbf{p}_{d,n} = (D_{ph} / D_{ph}^{0})$ $(\mathbf{p}_{d,n}^{\text{ini}}\text{-} \mathbf{p}_0)$ pour ($\mathbf{1} \leq n \leq N$)

e)- Calculer les valeurs des tailles de $D_i$ à partir de $\mathbf{D}_{pp} = \sum_{i=1}^{d} (D_i)^2 \mathbf{h}_i \mathbf{h}_i^{H}$ , à partir des valeurs de $D_i$ déterminées, calculer les paramètres $\sigma_{\theta_{\min}}$ et $\sigma_{\theta_{\max}}$ en utilisant $\sigma_{d,1} = \sigma_{\theta_{\min}} |\cos (\Delta_m)|$ et $\sigma_{d,d} = \sigma_{\theta,m}|\cos (\Delta_m)|$ où $\sigma_{\theta_{\min}}$ et $\sigma_{\theta_{\max}}$ sont les valeurs minimale et maximale de la précision en azimut à l'élévation $\Delta_m$ ainsi qu'une précision $\sigma_\Delta$ en $\Delta_m = 0.$,

f) - tester si $\sigma_{\theta_{\min}} /\sigma_{\theta_{\max}}$ vérifie les critères techniques donnés par le cahier des charges, si oui valider la position des capteurs $\mathbf{p}_{d,n}$ et définir un réseau en tenant compte de la valeur desdites positions sinon, considérer un nouveau réseau faire varier l'indice $i$=$i$+1 et réitérer les étapes c) à e)

**2.** Procédé selon la revendication 1 **caractérisé en ce qu'**il comporte une étape au cours de laquelle, on détermine des critères d'omnidirectionnalité et de pouvoir de résolution à partir de la position $\mathbf{p}_{d,n}$ des capteurs d'un réseau qu'il soit le réseau tiré initialement ou encore le réseau directif défini en tenant compte de la matrice de covariance $\mathbf{D}_{pp}$ des positions des capteurs et de

$$Q_{pp} = \frac{1}{N} \sum_{n=1}^{N} \left( p_{d,n} - \overline{p} \right)^{\otimes 2} \left( p_{d,n} - \overline{p} \right)^{\otimes 2H}$$

à partir de $Q_{pp}$ et de $\mathbf{D}_{pp}$ déterminer la valeur de $\tilde{\mathbf{Q}}_{pp}$

décomposer en éléments propres la matrice $\tilde{\mathbf{Q}}_{pp}$ ce qui conduit à $\tilde{\mathbf{Q}}_{pp} = \sum_{i=1}^{d \times d} Q_i \mathbf{v}_i (\mathbf{v}_i)^{H}$

déterminer le critère d'omnidirectionalité en résolution $R_{omni} = \dfrac{\max_i Q_i}{\min_i Q_i}$

déterminer le pouvoir de résolution $R_{power} = \min_i |Q_i - \mathbf{1}|$

comparer ces deux valeurs à des valeurs données dans le cahier des charges et si les valeurs déterminées ne satisfont pas le critère du cahier des charges, choisir un nouveau réseau et réitérer les différentes étapes de calcul de position des capteurs et des critères d'omnidirectionalité et de pouvoir de résolution, pour des réseaux de dimension 1, 2 ou 3.

**3.** Procédé selon la revendication 1 **caractérisé en ce qu'**il comporte une étape au cours de laquelle on classe les réseaux en fonction d'un degré d'ambiguïté en exécutant les étapes suivantes :

Initialiser un ensemble $\Psi$ contenant des réseaux et leurs caractéristiques,

déterminer, pour un réseau, le critère $\eta_1^{ambig}$ de la robustesse aux ambiguïtés d'ordre 1 à partir de la connaissance de la fréquence $f_{max}$

$$\eta_1\left(\lambda = \frac{c}{f}\right) = \min_{\substack{\Delta k \\ \Delta k^H \Delta k \leq 2\frac{f}{f_{max}}}} \left(1 - Diag_{\lambda_{max}}\left(\mathbf{a}_{\lambda_{max}}\left(\mathbf{0}_d\right), \Delta k\right)\right)$$

Où $\lambda_{max} = c / f_{max}$ sachant que $f \leq f_{max}$.

avec $\Delta k$ correspondant à une distance

$$Diag_\lambda\left(\mathbf{a}_\lambda\left(\mathbf{k}_d\left(\Theta_1\right)\right), \mathbf{k}_d\right) = Diag_\lambda\left(\mathbf{a}_\lambda\left(\mathbf{0}_d\right), \Delta k\right)$$

$$\Delta \mathbf{k} = \mathbf{k}_d - \mathbf{k}_d\left(\Theta_1\right)$$

Où $\mathbf{0}_d = [0 \ ... \ 0]^T$. Sachant que $\mathbf{k}_d(\Theta_1)^H \mathbf{k}_d(\Theta_1) \leq 1$ et que $\mathbf{k}_d{}^H \mathbf{k}_d \leq 1$

Classer les éléments contenus dans $\Psi$ suivant le niveau des ambiguïtés d'ordre 1 tel qu'au final

$$\Psi = \left\{\left(\eta_1^{ambig(k)}, \mathbf{p}_{d,n}^{(k)}\right) \quad \text{pour} \quad (1 \leq k \leq K) \quad \text{avec} \quad \eta_1^{ambig(1)} \geq \cdots \geq \eta_1^{ambig(K)}\right\}$$

Classement du réseau le plus robuste aux ambiguïtés d'ordre 1 au réseau le moins robuste en exécutant les étapes suivantes

Stockage des *nb* meilleurs réseaux vis à vis des ambiguïtés d'ordre 1 tel que

$$\Psi_{opt} \subset \Psi \quad \text{avec} \quad \Psi_{opt} = \left\{\left(\eta_1^{ambig(k)}, \mathbf{p}_{d,n}^{(k)}\right) \quad \text{pour} \quad (1 \leq k \leq nb)\right\}$$

Réitérer lesdites étapes pour tous les réseaux i=1,....I

Calcul des ambiguïtés d'ordre $P$ des réseaux de $\Psi_{opt}$ selon

Le critère de robustesse aux ambiguïtés d'ordre $P$ $\eta_P(\lambda)^k$ pour la longueur d'onde $\lambda$ vérifiant

$$\Pr\left(\eta_P(\lambda)^k < \eta_P(\lambda)\right) = p_{fa} \text{ pour } 1 \leq k \leq nb$$

où Pr(.) est une probabilité et où $p_{fa}$ vaut typiquement 5%.

pour obtenir $\Psi_{opt} = \{(\eta_1^{ambig(k)}, \eta_P(c / f_{max})^{(k)}, \mathbf{p}_{d,n}^{(k)})$ pour $(1 \leq k \leq nb)\}$ .

Classement des éléments de $\Psi_{opt}$ suivant le niveau des ambiguïtés d'ordre $P$ tel qu'en final

$$\Psi_{opt} = \left\{\left(\eta_1^{ambig(k)}, \eta_P^{(k)}(c/f_{max}), \mathbf{p}_{d,n}^{(k)}\right) \quad \text{pour} \quad (1 \leq k \leq nb) \quad \text{avec} \quad \eta_P^{(1)} \geq \cdots \geq \eta_P^{(nb)}\right\} :$$

Classement du réseau le plus robuste aux ambiguïtés d'ordre P au réseau le moins robuste.

4. Procédé selon l'une des revendications 1 à 3 **caractérisé en ce que** le réseau de capteurs est un réseau en forme de V dont les capteurs sont disposés sur deux branches faisant entre elles un angle $\delta$.

5. Procédé selon l'une des revendications 1 à 3 **caractérisé en ce que** le réseau de capteurs est un réseau dont les capteurs sont répartis sur un double cercle.

6. Procédé selon l'une des revendications 1 à 3 **caractérisé en ce que** le réseau initial est un réseau de capteur d-D dont la répartition des capteurs suit une loi gaussienne.

7. Procédé selon l'une des revendications 1 à 3 **caractérisé en ce que** le réseau initial est un réseau de capteur d-D dont la répartition des capteurs suit une loi uniforme.

**Patentansprüche**

1. Verfahren zur Bestimmung der optimalen Position identischer Sensoren in einem Kommunikationsnetzwerk, wobei das Netzwerk eine Dimension d-D ($1 \leq d \leq 3$) aufweist, die zur Durchführung goniometrischer Messungen bestimmt ist, die darin bestehen, die Richtungen von Quellen innerhalb des Kommunikationsnetzwerks zu schätzen, wobei das Netzwerk durch das Verfahren erhalten wird, das die Vieldeutigkeiten unter Berücksichtigung von Parametern eines Pflichtenhefts wie der physikalischen Öffnung $Dp_h$ eines Netzwerks minimiert, **dadurch gekennzeichnet, dass** es mindestens die folgenden Schritte aufweist:

a) - Initialisieren einer Netzwerkgruppe $\Psi$ und eines Werts i, der der Kennzahl eines Netzwerks entspricht,
b)- Auswählen durch Auslosen eines i- ten Ausgangsnetzwerks $d$- D ($\mathbf{p}_{d,n}^{ini}$ für ($1 \leq n \leq N$) ) als Gruppe von N Sensoren mit den Positionen $p_{d,ni}$,
c)- Bestimmen der physikalischen Öffnung des ausgewählten Netzwerks durch Durchführung der folgenden Schritte:

Schritt Nr. 1 (DPH) : Initialisieren eines Werts für die physikalische Öffnung $Dp_h=0$ für alle $d$- Tupel $p_{d,ni}$, wobei ($1 \leq i \leq d +1$), da ($1 \leq n_f \leq N$),
Schritt Nr. 2 (DPH): Berechnen:

- der Distanz $Di$ zwischen den zwei Sensoren, wenn $d=1$,
- des Durchmessers $Di$ des Kreises, der durch die drei Sensoren verläuft, wenn $d=2$,
- des Durchmessers $D$ der Sphäre, die durch die 4 Sensoren verläuft, wenn $d=3,$

Schritt Nr. 3 (DPH) : Berechnen des Zentrums $\bar{\mathbf{p}}_0$ des Kreises oder der Sphäre, wenn d>1, für d=1 Berechnen der mittleren Position der zwei Sensoren,
wenn $(p_{d,n}- p_0)^H (p_{d,n}- p_0) \leq D/ 2$ für ($1 \leq n \leq N$) da $D_{ph}=D$
Schritt Nr. 4 (DPH): Übergang zu den nächsten d-Tupels und Rückkehr zu Schritt Nr. 2 (DPH),

d)- Umwandeln des Ausgangsnetzwerks in ein Netzwerk der physikalischen Öffnung $D_{ph}$ durch Durchführen von $p_{d,n} = (D_{ph} / D_{ph}^0) (p_{d,n}^{ini}- p_0)$ für ($1 \leq n \leq N$),

e)- Berechnen der Werte der Größen von $D_i$, ausgehend von $\mathbf{D}_{p^p} = \sum_{i=1}^{d} (D_i)^2 \mathbf{h}_i \mathbf{h}_i^H$ , ausgehend von den bestimmten Werten von $D_i$, Berechnen der Parameter $\sigma_{\theta min}$ und $\sigma_{\theta max}$ bei Verwendung von $\sigma_{\mathbf{d,l}} = \sigma_{\theta min}|\cos (\Delta_{\mathbf{m}}) |$ und $\sigma_{\mathbf{d,d}} = \sigma_{\theta,\mathbf{m}}|\cos (\Delta_{\mathbf{m}}|)$,
wobei $\sigma_{\theta min}$ und $\sigma_{\theta max}$ der minimale und maximale Wert der Azimutpräzision in der Elevation $\Delta_m$ sowie mit einer Präzision $\sigma_{\Delta}$ bei $\Delta_m = 0$ ist,
f) - Testen, ob $\sigma_{\theta min} / \sigma_{\theta max}$ die technischen Kriterien des Pflichtenhefts verifiziert, wenn ja, Validieren der Position der Sensoren $\mathbf{p}_{d,n}$ und Definieren eines Netzwerks unter Berücksichtigung des Werts der Positionen, anderenfalls Berücksichtigen eines neuen Netzwerks, Ändern der Kennzahl $i=i+1$ und Wiederholen der Schritte c) bis e).

2. Verfahren nach Anspruch 1, **dadurch gekennzeichnet, dass** es einen Schritt umfasst, bei dem die Allrichtungs- und Auflösungsvermögenskriterien ausgehend von der Position $\mathbf{p}_{d,n}$ der Sensoren eines Netzwerks bestimmt werden, unabhängig davon, ob es sich um das ursprünglich ausgewählte Netzwerk handelt oder das bestimmte direktive

Netzwerk, unter Berücksichtigung der Kovarianzmatrix $D_{pp}$ der Positionen der Sensoren und von

$$Q_{pp} = \frac{1}{N} \sum_{n=1}^{N} \left( p_{d,n} - \bar{p} \right)^{\otimes 2} \left( p_{d,n} - \bar{p} \right)^{\otimes 2H},$$

Bestimmen des Werts von $\tilde{Q}_{pp}$ ausgehend von $Q_{pp}$ und von $D_{pp}$,

Zerlegen der Matrix $\overline{Q}_{pp}$ in eigene Elemente, was zu $\tilde{Q}_{pp} = \sum_{i=1}^{d \times d} Q_i v_i \left( v_i \right)^H$ führt,

Bestimmen des Auflösungs-Allrichtungskriteriums $R_{omni} = \dfrac{\max_i Q_i}{\min_i Q_i}$,

Bestimmen der Auflösungsleistung $R_{power} = \min_i |Q_i - 1|$,

Vergleichen dieser zwei Werte mit im Pflichtenheft gegebenen Werten, und, wenn die bestimmten Werte nicht das Kriterium des Pflichtenhefts erfüllen, Auswählen eines neuen Netzwerks und Wiederholen der verschiedenen Schritte zur Positionsberechnung der Sensoren und der Allrichtungs- und Auflösungsleistungskriterien für Netzwerke der Größe 1, 2 oder 3.

3. Verfahren nach Anspruch 1, **dadurch gekennzeichnet, dass** es einen Schritt aufweist, bei dem die Netzwerke in Abhängigkeit eines Vieldeutigkeitsgrads durch Durchführen der folgenden Schritte klassifiziert werden:

Initialisieren einer Gruppe $\Psi$, die Netzwerke und ihre Merkmale enthält,
Bestimmen, für ein Netzwerk, des Kriteriums $\eta_1^{ambig}$ der Robustheit gegenüber Vieldeutigkeiten der Ordnung 1 ausgehend von der Kenntnis der Frequenz $f_{max}$,

$$\eta_1 \left( \lambda = \frac{c}{f} \right) = \min_{\substack{\Delta k \\ \Delta k^H \Delta k \leq 2 \frac{f}{f_{max}}}} \left( 1 - Diag_{\lambda_{max}} \left( a_{\lambda_{max}} \left( 0_d \right), \Delta k \right) \right)$$

wobei $\lambda_{max} = c / f_{max}$, da $f \leq f_{max}$,
mit $\Delta k$ gleich einer Distanz

$$Diag_{\lambda} \left( a_{\lambda} \left( k_d \left( \Theta_i \right) \right), k_d \right) = Diag_{\lambda} \left( a_{\lambda} \left( 0_d \right), \Delta k \right)$$

$$\Delta k = k_d - k_d \left( \Theta_1 \right)$$

wobei $0_d = [0 \ldots 0]^T$, da $k_d(\Theta_1)^H k_d(\Theta_1) \leq 1$ und da $k_d{}^H k_d \leq 1$,
Klassifizieren der in $\Psi$ enthaltenen Elemente gemäß dem Vieldeutigkeitsniveau der Ordnung 1, so dass letztendlich

$$\Psi = \left\{ \left( \eta_1^{ambig(k)}, p_{d,n}^{(k)} \right) \text{ für } (1 \leq k \leq K) \text{ mit } \eta_1^{ambig(1)} \geq \cdots \geq \eta_1^{ambig(K)} \right\},$$

Klassifizieren vom gegenüber den Vieldeutigkeiten der Ordnung 1 robustesten Netzwerk zum am wenigsten robusten Netzwerk anhand der folgenden Schritte:

Speichern der gegenüber den Vieldeutigkeiten der Ordnung 1 $nb$ besten Netzwerke, wie $\Psi_{opt} \subset \Psi$ mit $\Psi_{opt}$

= {($\eta_1^{ambig(k)}$ , $\mathbf{p}_{d,n}^{(k)}$) für ($1{\leq}k{\leq}nb$) },

Wiederholen der Schritte für alle Netzwerke i=1 ,....|,

Berechnen der Vieldeutigkeiten der Ordnung $P$ der Netzwerke von $\Psi_{opt}$ gemäß dem Kriterium der Robustheit gegenüber Vieldeutigkeiten der Ordnung $P$ $\eta_p(\lambda)^k$ für die Wellenlänge $\lambda$, die

$$\Pr\left(\eta_P(\lambda)^k < \eta_P(\lambda)\right) = p_{fa} \text{ für } 1{\leq}k{\leq}nb \text{ prüft,}$$

wobei Pr(.) eine Wahrscheinlichkeit ist und wobei $p_{fa}$ typischerweise 5 % beträgt,

um $\Psi_{opt}$ = {($\eta_1^{ambig(k)}$, $\eta_P$ ($c$ / $f_{max}$)$^{(k)}$, $\mathbf{p}_{d,n}^{(k)}$) für ($1{\leq}k{\leq}nb$) } zu erhalten,

Klassifizieren der Elemente von $\Psi_{opt}$ gemäß dem Niveau der Vieldeutigkeiten der Ordnung $P$, so dass letztendlich $\Psi_{opt}$ = {($\eta_1^{ambig(k)}$, $\eta_P^{(k)}$ ($c$/ $f_{max}$), $\mathbf{p}_{d,n}^{(k)}$) für ($1{\leq}k{\leq}nb$) mit $\eta_P^{(1)} {\geq}...{\geq} \eta_P^{(nb)}$}

Klassifizieren vom gegenüber Vieldeutigkeiten der Ordnung $P$ robustesten Netzwerk zum am wenigsten robusten Netzwerk.

4. Verfahren nach einem der Ansprüche 1 bis 3, **dadurch gekennzeichnet, dass** das Sensometzwerk ein V-förmiges Netzwerk ist, dessen Sensoren auf zwei Zweigen angeordnet sind, die zwischen sich einen Winkel $\delta$ bilden.

5. Verfahren nach einem der Ansprüche 1 bis 3, **dadurch gekennzeichnet, dass** das Sensometzwerk ein Netzwerk ist, dessen Sensoren auf einem Doppelkreis verteilt sind.

6. Verfahren nach einem der Ansprüche 1 bis 3, **dadurch gekennzeichnet, dass** das Ausgangsnetzwerk ein Sensometzwerk d-D ist, dessen Sensorverteilung einem Gaußschen Gesetz folgt.

7. Verfahren nach einem der Ansprüche 1 bis 3, **dadurch gekennzeichnet, dass** das Ausgangsnetzwerk ein Sensometzwerk d-D ist, dessen Sensorverteilung einem uniformen Gesetz folgt.

## Claims

1. A method for determining the optimal position of identical sensors within a communications network, said network having a dimension d- D ($1{\leq}d{\leq}3$), designed to carry out goniometry measurements consisting in estimating the directions of sources within said communications network, said network obtained by the method minimising the ambiguities by taking into account parameters of specifications such as the physical aperture $D_{ph}$ of a network, **characterised in that** it comprises at least the following steps:

a)- initialising a set $\Psi$ of networks and a value i corresponding to the index of a network

b)- selecting by drawing an i- nth initial d- D network ($p_{d,n}^{ini}$ for ($1{\leq}n{\leq}N$) ) set of N position sensors $p_{d,ni}$

c)- determining the physical aperture of the selected network by executing the following steps:

Step 1 (DPH) : initialising a value for the physical aperture: $D_{ph}$ = 0 for all of the $d$- uplets $p_{d,ni}$, where ($1{\leq}i{\leq}d$+1) given that ($1{\leq}n_i{\leq}N$)

Step 2 (DPH): calculating:

- the distance $Di$ between the two sensors when $d$=1
- the diameter $Di$ of the circle passing through the three sensors when $d$=2
- the diameter $D$ of the sphere passing through the four sensors when $d$=3

Step 3 (DPH) : calculating the centre $\overline{\mathbf{p}}_0$ of the circle or of the sphere when d>1, for d=1 calculating the average position of the two sensors,

if ($p_{d,n}$- $p_0$)$^H$ ($p_{d,n}$- $p_0$) ${\leq}$D/ 2 for ($1{\leq}n{\leq}N$), then $D_{ph}$=D

Step 4 (DPH): passage to the next $d$-uplets and return to step 2 (DPH)

d)- ransforming the initial network into a physical aperture network $D_{ph}$ by carrying out: $p_{d,n}$ = ($D_{ph}$ / $D_{ph}^0$) ($p_{d,n}^{ini}$- $p_0$) for ($1{\leq}n{\leq}N$)

e)- calculating the values of the sizes of $D_i$ on the basis of $D_{PP} = \sum_{i=1}^{d} (D_i)^2 \mathbf{h}_i \mathbf{h}_i^H$ , on the basis of the

determined values of $D_i$, calculating the parameters $\sigma_{\theta min}$ and $\sigma_{\theta max}$ using $\sigma_{d,1} = \sigma_{\theta min} |\cos (\Delta_m)|$ and $\sigma_{d,d} = \sigma_{\theta,m} |\cos (\Delta_m)|$,

where $\sigma_{\theta min}$ and $\sigma_{\theta max}$ are the minimum and maximum values of the azimuth precision at the elevation $\Delta_m$, as well as a precision $\sigma_\Delta$ by $\Delta_m = 0$

f) - testing whether $\sigma_{\theta min}/\sigma_{\theta max}$ complies with the technical criteria provided in the specifications, if so then confirming the position of the sensors $p_{d,n}$ and defining a network by taking into account the value of said positions, otherwise considering a new network, varying the index $i=i+1$ and repeating steps c) to e).

2. The method according to claim 1, **characterised in that** it comprises a step during which omnidirectionality and resolving power criteria are determined on the basis of the position $p_{d,n}$ of the sensors of a network, whether it is the initially drawn network or even the defined directive network, by taking into account the covariance matrix $D_{pp}$

of the positions of the sensors and of $Q_{pp} = \frac{1}{N} \sum_{n=1}^{N} \left( p_{d,n} - \bar{p} \right)^{\otimes 2} \left( p_{d,n} - \bar{p} \right)^{\otimes 2H}$

determining the value of $\tilde{\mathbf{Q}}_{pp}$ on the basis of $Q_{pp}$ and of $D_{pp}$

dividing the matrix $\tilde{\mathbf{Q}}_{pp}$ into specific elements which results in $\tilde{Q}_{pp} = \sum_{i=1}^{d \times d} Q_i \mathbf{v}_i (\mathbf{v}_i)^H$

determining the omnidirectionality criterion by resolution $R_{omni} = \dfrac{\max_i Q_i}{\min_i Q_i}$

determining the resolving power $R_{power} = \min_i |Q_i - 1|$

comparing these two values with values provided in the specifications and, if the determined values do not meet the criterion of the specifications, selecting a new network and repeating the various steps of calculating the position of the sensors and the omnidirectionality and resolving power criteria for 1, 2 or 3 dimension networks.

3. The method according to claim 1, **characterised in that** it comprises a step during which the networks are classified as a function of a degree of ambiguity by executing the following steps:

initialising a set $\Psi$ containing networks and their characteristics
determining, for a network, the $\eta_1{}^{ambig}$ criterion of the robustness to ambiguities of order 1 on the basis of the knowledge of the frequency $f_{max}$

$$\eta_1 \left( \lambda = \frac{c}{f} \right) = \min_{\substack{\Delta k \\ \Delta k^H \Delta k \leq 2 \frac{f}{f_{max}}}} \left( 1 - Diag_{\lambda_{max}} \left( \mathbf{a}_{\lambda_{max}} (\mathbf{0}_d), \Delta k \right) \right)$$

where $\lambda_{max} = c/f_{max}$, given that $f \leq f_{max}$,
with $\Delta k$ corresponding to a distance

$$Diag_\lambda \left( \mathbf{a}_\lambda \left( \mathbf{k}_d (\Theta_1) \right), \mathbf{k}_d \right) = Diag_\lambda \left( \mathbf{a}_\lambda (\mathbf{0}_d), \Delta k \right)$$

$$\Delta k = \mathbf{k}_d - \mathbf{k}_d (\Theta_1)$$

where $0_d$ [0 ... 0] $^T$, given that $k_d$ ($\Theta_1$) $^H k_d$ ($\Theta_1$) $\leq 1$ and that $k_d{}^H k_d \leq 1$;

classifying the elements contained in $\Psi$ according to the level of first-order ambiguities such that in the end

$$\Psi = \left\{ \left( \eta_1^{ambig(k)}, \mathbf{p}_{d,n}^{(k)} \right) \text{ for } (1 \leq k \leq K) \text{ with } \eta_1^{ambig(1)} \geq \cdots \geq \eta_1^{ambig(K)} \right\}$$

classifying the network that is most robust to first-order ambiguities to the network that is least robust by executing the following steps:

storing *nb* best networks in relation to first-order ambiguities such that $\Psi_{opt} \subset \Psi$ with $\Psi_{opt} = \{(\eta_1{}^{ambig(k)}, \mathbf{p}_{d,n}{}^{(k)})$ for $(1 \leq k \leq nb) \}$

repeating said steps for all of the networks i=1,...|

calculating *P*-order ambiguities for the networks of $\Psi_{opt}$ according to the criterion for robustness to $P$ $\eta_P$ $(\lambda)^k$ -order ambiguities for the wavelength $\lambda$ verifying

$\mathbf{Pr}$ ($\eta_P$ $(\lambda)^k$ < $\eta_P$ $(\lambda)$ ) = $p_{fa}$ for $1 \leq k \leq nb$,

where Pr(.) is a probability and where $p_{fa}$ typically equals 5%,

so as to obtain $\Psi_{opt} = \{(\eta_1{}^{ambig(k)}, \eta_P$ $(c/ f_{max})^{(k)}, \mathbf{p}_{d,n}{}^{(k)})$ for $(1 \leq k \leq nb) \}$ ;

classifying elements of $\Psi_{opt}$ according to the level of *P*-order ambiguities such that in the end $\Psi_{opt} = \{(\eta_1{}^{ambig(k)}, \eta_P{}^{(k)}$ $(c/ f_{max}), \mathbf{p}_{d,n}{}^{(k)})$ for $(1 \leq k \leq nb)$ with $\eta_P{}^{(1)} \geq ... \geq \eta_P{}^{(nb)}\}$

classifying the network that is most robust to *P*-order ambiguities to the least robust network.

4. The method according to any one of claims 1 to 3, **characterised in that** the network of sensors is a V-shaped network, the sensors of which are disposed on two branches that together form an angle $\delta$.

5. The method according to any one of claims 1 to 3, **characterised in that** the network of sensors is a network in which the sensors are distributed over a double circle.

6. The method according to any one of claims 1 to 3, **characterised in that** the initial network is a network of d-D sensors in which the sensors are distributed according to a Gaussian rule.

7. The method according to any one of claims 1 to 3, **characterised in that** the initial network is a network of d-D sensors in which the sensors are distributed according to a uniform rule.

FIG.1

FIG.2

FIG.4

FIG.3

Réseau circulaire
de rayon $R_1$ avec $N_1$ capteurs

$R_1$

$R_2$

$\delta_2 - \delta_1$

Capteur Elémentaire

Réseau circulaire
de rayon $R_2$ avec $N_2$ capteurs

FIG.5

$\overline{O_1O_2} = \begin{bmatrix} x_0 \\ y_0 \end{bmatrix}$

$O_2$

$\delta$

$O_1$

FIG.6

Capteur
élémentaire

$D_{ph}$

FIG.7

## RÉFÉRENCES CITÉES DANS LA DESCRIPTION

**Littérature non-brevet citée dans la description**

- **H. GAZZAH ; S. MARCOS.** Cramer-Rao Bounds for Antenna Array Design. *journal IEEE Trans. Signal Processing,* Janvier 2006, vol. 54 (1), 336-345

- **H. GOZZAH ; K. ABED-MERAIN.** Optimum Anbiguity-free Isotropic Antenna Arrays. *ICASSP 2009,* 19 Avril 2009, 2157-2160